(19) Europäisches Patentamt
European Patent Office
Office européen des brevets

(11) **EP 4 343 635 A1**

(12) **EUROPEAN PATENT APPLICATION**

(43) Date of publication:
**27.03.2024 Bulletin 2024/13**

(21) Application number: **23186375.4**

(22) Date of filing: **19.07.2023**

(51) International Patent Classification (IPC):
***G06N 3/063*** *(2023.01)* ***G06N 3/0464*** *(2023.01)*
***G06F 13/28*** *(2006.01)* *G06N 3/09 (2023.01)*

(52) Cooperative Patent Classification (CPC):
**G06F 13/28; G06N 3/0464; G06N 3/063;**
G06N 3/09

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 US 202217946231**

(71) Applicant: **INTEL Corporation**
**Santa Clara, CA 95054 (US)**

(72) Inventors:
- **KADRI, Sudheendra**
  **Folsom, 95630 (US)**
- **CREWS, Darren**
  **Portland, 97229 (US)**
- **MATHAIKUTTY, Deepak Abraham**
  **Chandler, 85224 (US)**
- **DEIDDA, Andrea**
  **Celbridge, W23Y960 (IE)**
- **RAHA, Arnab**
  **San Jose, 95136 (US)**
- **BRADY, Kevin**
  **Newry, BT342GB (GB)**
- **BERNARD, David Thomas**
  **Kilcullen, R56E160 (IE)**

(74) Representative: **Rummler, Felix et al**
**Maucher Jenkins**
**Seventh Floor Offices**
**Artillery House**
**11-19 Artillery Row**
**London SW1P 1RT (GB)**

# (54) DEEP NEURAL NETWORK (DNN) ACCELERATORS WITH WEIGHT LAYOUT REARRANGEMENT

(57) An DNN accelerator includes a DMA engine that can rearrange weight data layout. The DMA engine may read a weight tensor from a memory (e.g., DRAM). The weight tensor includes weights arranged in a 3D matrix. The DMA engine may partition the weight tensor into a plurality of virtual banks based on a structure of a PE array, e.g., based on the number of activated PE columns in the PE array. Then the DMA engine may partition a virtual bank into a plurality of virtual sub-banks. The DMA engine may also identify data blocks from different ones of the plurality of virtual sub-banks. A data block may include a plurality of input channels and may have a predetermined spatial size and storage size. The DMA engine form a linear data structure by interleaving the data blocks. The DMA engine can write the linear data structure into another memory (e.g., SRAM).

DMA Engine
220
Read Module
310
Partition Module
320
Transposing Module
330
Compression Module
340
Rearrangement Module
350
Write Module
350

FIG. 3

EP 4 343 635 A1

## Description

Technical Field

This disclosure relates generally to neural networks, and more specifically, to DNN accelerators with weight layout rearrangement.

Background

DNNs are used extensively for a variety of artificial intelligence applications ranging from computer vision to speech recognition and natural language processing due to their ability to achieve high accuracy. However, the high accuracy comes at the expense of significant computation cost. DNNs have extremely high computing demands as each inference can require hundreds of millions of MAC (multiply-accumulate) operations as well as hundreds of millions of weights to be stored for classification or detection. Therefore, techniques to improve efficiency of DNNs are needed.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an example DNN, in accordance with various embodiments.
FIG. 2 is a block diagram of an example DNN accelerator, in accordance with various embodiments.
FIG. 3 is a block diagram of a DMA (direct memory access) module, in accordance with various embodiments.
FIG. 4 illustrates a processing element (PE) array, in accordance with various embodiments.
FIG. 5 is a block diagram of a PE, in accordance with various embodiments.
FIG. 6 illustrates an example convolution, in accordance with various embodiments.
FIG. 7A illustrates an example weight tensor, in accordance with various embodiments.
FIG. 7B illustrates virtual banks generated from the weight tensor, in accordance with various embodiments.
FIG. 8 illustrates partitioning a virtual bank into virtual sub-banks, in accordance with various embodiments.
FIG. 9 illustrates an example linear data structure, in accordance with various embodiments.
FIG. 10 illustrate formation of linear data structures through parallel data processing, in accordance with various embodiments.
FIG. 11 is a flowchart showing a method of deep learning, in accordance with various embodiments.
FIG. 12 illustrates a deep learning environment, in accordance with various embodiments.
FIG. 13 is a block diagram of an example DNN system, in accordance with various embodiments.
FIG. 14 is a block diagram of an example computing device, in accordance with various embodiments.

Detailed Description

*Overview*

The last decade has witnessed a rapid rise in AI (artificial intelligence) based data processing, particularly based on DNN. DNNs are widely used in the domains of computer vision, speech recognition, image, and video processing mainly due to their ability to achieve beyond human-level accuracy. The significant improvements in DNN model size and accuracy coupled with the rapid increase in computing power of execution platforms have led to the adoption of DNN applications even within resource constrained mobile and edge devices that have limited energy availability. DNN applications are usually run on DNN accelerators. Peak TOPS (Tera Operations Per Second) has been a metric to measure performance of DNN accelerators. For energy-constrained edge devices, two other metrics, TOPS/mm$^2$ (which indicates performance per area) and TOPS/W (which indicates performance per power) are also used.

DNN accelerators usually process a large amount of data for inference tasks, which have been a bottleneck for energy efficiency. Energy efficiency can be improved by reducing data transfer and memory access, maximizing data reuse and resource utilization, and reducing the total number of computations for the same amount of work done. However, it can be challenging to improve energy efficiency in certain computation architectures, such as heterogeneous computation architectures where various processing units are used for running a DNN application. The processing units may be XPUs (X processing units), which are heterogeneous computation architectures that can be mapped to CPU (central processing unit), GPU (graphical processing unit), VPU (versatile processing unit), or other types of processing units. Different XPUs may be dynamically selected to run inference, e.g., based on availability of the XPUs, etc. Different from activation tensors (e.g., input feature maps) that can be transmitted between DNN layers and can be produced and consumed in an optimal manner, weight tensors are external inputs to processing units for convolutional layers. In such cases, it can be beneficial to have a single copy of the trained weights that all the XPUs may use. Each XPU can pull weights from this single source when they are activated to infer the DNN model. The compiler of the XPU can often create a weight layout, which is optimal for the XPU, in compilation. This compilation process would create a unique copy of a weight tensor that is optimized for the XPU.

However, a sparsity aware XPU would need a sparse weight layout, while other XPUs (e.g., CPU, GPU, etc.) would work off a dense weight layout. If a common storage format is desired for all DNN accelerators, a dense weight layout will result in the sparsity aware DNN accelerator achieving suboptimal performance boost due to sparsity. Also, the weight layout rearrangement function in the compiler can be time consuming. Weight layout rearrangement usually requires the compiler to understand the optimal schedule of the DNN layers and perform the weight layout rearrangement task. The weight layout rearrangement during compilation can increase the compilation time, which increases the inference latency of the DNN. To minimize such inference latency, weight layout rearrangement is often avoided. A consequence of avoiding weight layout rearrangement is that weight data transfer cannot be optimized for improving energy efficiency. Therefore, improved technology for weight data transfer in DNN accelerators is needed.

Embodiments of the present disclosure may improve on at least some of the challenges and issues described above by providing DNN accelerators that include an DMA engine capable of rearranging weight layout for convolutional operations (also referred to as "convolutions"). A convolution can be run on an input tensor and a weight tensor to produce an output tensor. By rearranging weight layout, the DMA engine can convert a weight tensor having a layout of a 3D matrix into a linear layout and write the weight data in the linear layout into a PE array in the DNN accelerator for running the convolution.

In some embodiments, the DMA engine reads a weight tensor for a memory, e.g., a main memory of a DNN accelerator and partitions the weight tensor into virtual banks. The weight tensor may have a spatial size of $F \times C_{in} \times C_{out}$, where F is the spatial size of the convolutional kernel(s) for the convolution, $C_{in}$ is the number of input channels in the input tensor of the convolution, $C_{out}$ is the number of output channels in the output tensor of the convolution. The DMA engine may partition the weight tensor in the output channel dimension. Each virtual bank may include a portion of the $C_{out}$ output channels. In some embodiments, the number of virtual banks of the weight tensor may equal the number of activated PE columns in a PE array that will perform a convolution. An activated PE column is a PE column that includes one or more activated PEs, i.e., PEs that will perform MAC operations in the convolution. The DMA engine can perform the layout rearrangement at a virtual bank level, e.g., by generating a linear data structure for each virtual bank of the weight tensor.

To generate the linear data structure of a virtual bank, the DMA engine can split the virtual bank into virtual sub-banks, e.g., in the output dimension. The DMA engine may further identify data blocks from the virtual sub-banks. A data block may correspond to a single row and a single output channel in the corresponding virtual sub-bank. The data block may include a portion of the $C_{in}$ input channels. The DMA engine can interleave data blocks from different virtual sub-banks within the virtual bank to form the linear data structure, where the data blocks (e.g., all the data blocks) within the virtual bank are arrange linearly. Two adjacent data blocks in the linear data structure may from two different virtual sub-banks. In some embodiments, the DMA engine may process some or all the virtual sub-banks within the virtual bank before the interleaving process. For instance, the DMA engine may transpose weights in a virtual sub-bank, may reduce sparsity in a virtual sub-bank, or may rearrange the layout of the data blocks in a virtual sub-bank.

After the linear data structures of the virtual banks are generated, the DMA engine may write the linear data structures into a memory that is local to the PE array. For instance, the DMA engine may write the linear data structures into register files of PEs in the PE column corresponding to the virtual bank.

The DMA engine in the present disclosure may be implemented at least partially in hardware. By using the DMA engine for weight layout rearrangement, the DNN accelerator can avoid weight layout rearrangement during compilation. The weight layout rearrangement function may be activated by additional parameters in the DMA descriptors as part of the network execution graph. Weight tensors having 3D layout can be shared by various DNN accelerators. During the execution of a DNN model by the DNN accelerator, the DMA engine can perform the weight layout rearrangement in a way that is optimized for the DNN accelerator. Compared to a currently available solution which keeps the weight layout fixed for all DNN accelerators, the weight layout rearrangement in the present disclosure can better improve the performance of the DNN accelerator. Also, performance overhead for implementing the weight layout rearrangement feature in the present disclosure is minimal or even none. There may be area overhead, but as the DMA engine typically occupies a small portion of the overall area of the DNN accelerator, the area overhead, if any, is small.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The DNN systems, methods and devices of this disclosure each have several innovative aspects, no single one of which is solely responsible for all desirable attributes disclosed herein. Details of one or more implementations of the subject matter described in this specification are set forth in the description below and the accompanying drawings.

*Example DNN*

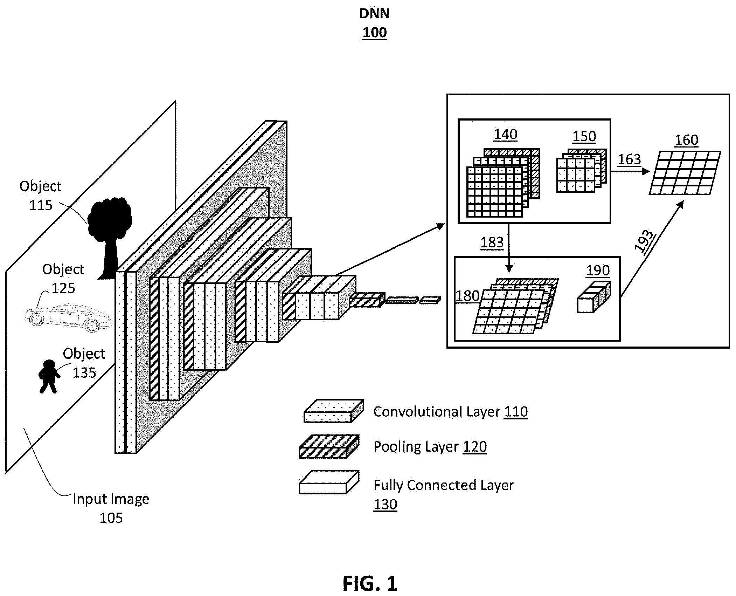

FIG. 1 illustrates an example DNN 100, in accordance with various embodiments. For purpose of illustration, the DNN 100 in FIG. 1 is a convolutional neural network (CNN). In other embodiments, the DNN 100 may be other types of DNNs. The DNN 100 is trained to receive images and output classifications of objects in the images. In the embodiments of FIG. 1, the DNN 100 receives an input image 105 that includes objects 115, 125, and 135. The DNN 100 includes a sequence of layers comprising a plurality of convolutional layers 110 (individually referred to as "convolutional layer 110"), a plurality of pooling layers 120 (individually referred to as "pooling layer 120"), and a plurality of fully connected layers 130 (individually referred to as "fully connected layer 130"). In other embodiments, the DNN 100 may include fewer, more, or different layers. In an inference of the DNN 100, the layers of the DNN 100 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 110 summarize the presence of features in the input image 105. The convolutional layers 110 function as feature extractors. The first layer of the DNN 100 is a convolutional layer 110. In an example, a convolutional layer 110 performs a convolution on an input tensor 140 (also referred to as input feature map (IFM) 140) and a filter 150. As shown in FIG. 1, the IFM 140 is represented by a $7 \times 7 \times 3$ three-dimensional (3D) matrix. The IFM 140 includes 3 input channels, each of which is represented by a $7 \times 7$ two-dimensional (2D) matrix. The $7 \times 7$ 2D matrix includes 7 input elements (also referred to as input points) in each row and 7 input elements in each column. The filter 150 is represented by a $3 \times 3 \times 3$ 3D matrix. The filter 150 includes 3 kernels, each of which may correspond to a different input channel of the IFM 140. A kernel a 2D matrix of weights, where the weights are arranged in columns and rows. A kernel can be smaller than the IFM. In the embodiments of FIG. 1, each kernel is represented by a $3 \times 3$ 2D matrix. The $3 \times 3$ kernel includes 3 weights in each row and 3 weights in each column. Weights can be initialized and updated by backpropagation using gradient descent. The magnitudes of the weights can indicate importance of the filter 150 in extracting features from the IFM 140.

The convolution includes MAC operations with the input elements in the IFM 140 and the weights in the filter 150. The convolution may be a standard convolution 163 or a depthwise convolution 183. In the standard convolution 163, the whole filter 150 slides across the IFM 140. All the input channels are combined to produce an output tensor 160 (also referred to as output feature map (OFM) 160). The OFM 160 is represented by a 5×5 2D matrix. The 5×5 2D matrix includes 5 output elements (also referred to as output points) in each row and 5 output elements in each column. For purpose of illustration, the standard convolution includes one filter in the embodiments of FIG. 1. In embodiments where there are multiple filters, the standard convolution may produce multiple output channels in the OFM 160.

The multiplication applied between a kernel-sized patch of the IFM 140 and a kernel may be a dot product. A dot product is the elementwise multiplication between the kernel-sized patch of the IFM 140 and the corresponding kernel, which is then summed, always resulting in a single value. Because it results in a single value, the operation is often referred to as the "scalar product." Using a kernel smaller than the IFM 140 is intentional as it allows the same kernel (set of weights) to be multiplied by the IFM 140 multiple times at different points on the IFM 140. Specifically, the kernel is applied systematically to each overlapping part or kernel-sized patch of the IFM 140, left to right, top to bottom. The result from multiplying the kernel with the IFM 140 one time is a single value. As the kernel is applied multiple times to the IFM 140, the multiplication result is a 2D matrix of output elements. As such, the 2D output matrix (i.e., the OFM 160) from the standard convolution 163 is referred to an OFM.

In the depthwise convolution 183, the input channels are not combined. Rather, MAC operations are performed on an individual input channel and an individual kernel and produce an output channel. As shown in FIG. 1, the depthwise convolution 183 produces a depthwise output tensor 180. The depthwise output tensor 180 is represented by a 5×5×3 3D matrix. The depthwise output tensor 180 includes 3 output channels, each of which is represented by a 5×5 2D matrix. The 5×5 2D matrix includes 5 output elements in each row and 5 output elements in each column. Each output channel is a result of MAC operations of an input channel of the IFM 140 and a kernel of the filter 150. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 193 is then performed on the depthwise output tensor 180 and a 1×1×3 tensor 190 to produce the OFM 160.

The OFM 160 is then passed to the next layer in the sequence. In some embodiments, the OFM 160 is passed through an activation function. An example activation function is the rectified linear activation function (ReLU). ReLU is a calculation that returns the value provided as input directly, or the value zero if the input is zero or less. The convolutional layer 110 may receive several images as input and calculates the convolution of each of them with each of the kernels. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 performs a convolution on the OFM 160 with new kernels and generates a new feature map. The new feature map may also be normalized and resized. The new feature map can be kernelled again by a further subsequent convolutional layer 110, and so on.

In some embodiments, a convolutional layer 110 has 4 hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 110). The convolutional layers 110 may perform various types of convolutions, such as 2-dimensional convolution, dilated or atrous convolution, spatial separable convolution, depthwise separable convolution, transposed convolution, and so on. The DNN 100 includes 16 convolutional layers 110. In other embodiments, the DNN 100 may include a different number of convolutional layers.

The pooling layers 120 down-sample feature maps generated by the convolutional layers, e.g., by summarizing the presents of features in the patches of the feature maps. A pooling layer 120 is placed between 2 convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the DNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of 2 pixels, so that the pooling operation reduces the size of a feature map by a factor of 2, e.g., the number of pixels or values in the feature map is reduced to one quarter the size. In an example, a pooling layer 120 applied to a feature map of 6×6 results in an output pooled feature map of 3×3. The output of the pooling layer 120 is inputted into the subsequent convolution layer 110 for further feature extraction. In some embodiments, the pooling layer 120 operates upon each feature map separately to create a new set of the same number of pooled feature maps.

The fully connected layers 130 are the last layers of the DNN. The fully connected layers 130 may be convolutional or not. The fully connected layers 130 receives an input operand. The input operand defines the output of the convolutional layers 110 and pooling layers 120 and includes the values of the last feature map generated by the last pooling layer 120 in the sequence. The fully connected layers 130 applies a linear combination and an activation function to the input operand and generates an individual partial sum. The individual partial sum may contain as many elements as there are classes: element i represents the probability that the image belongs to class i. Each element is therefore between 0 and 1, and the sum of all is worth one. These probabilities are calculated by the last fully connected layer 130 by using a logistic function (binary classification) or a softmax function (multi-class classification) as an activation function.

In some embodiments, the fully connected layers 130 classify the input image 105 and returns an operand of size N, where N is the number of classes in the image classification problem. In the embodiments of FIG. 1, N equals 3, as there are 3 objects 115, 125, and 135 in the input image. Each element of the operand indicates the probability for the input image 105 to belong to a class. To calculate the probabilities, the fully connected layers 130 multiply each input element by weight, makes the sum, and then applies an activation function (e.g., logistic if N=2, softmax if N>2). This is equivalent to multiplying the input operand by the matrix containing the weights. In an example, the individual partial sum includes 3 probabilities: a first probability indicating the object 115 being a tree, a second probability indicating the object 125 being a car, and a third probability indicating the object 135 being a person. In other embodiments where the input image 105 includes different objects or a different number of objects, the individual partial sum can be different.

*Example DNN Accelerator*

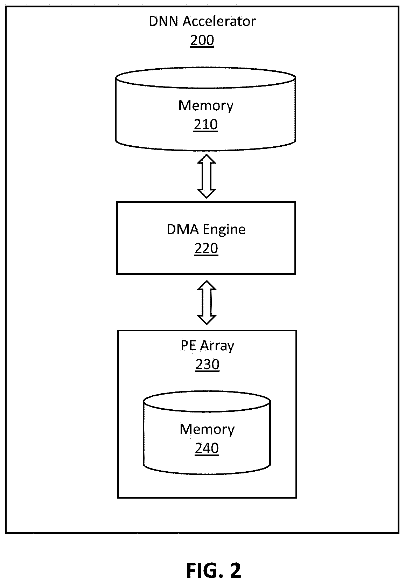

FIG. 2 is a block diagram of an example DNN accelerator 200, in accordance with various embodiments. The DNN accelerator 200 can run DNN models, e.g., the DNN 100 in FIG. 1. The DNN accelerator 200 includes a memory 210, a DMA engine 220, a PE array 230, and a memory 240 inside the PE array 230. In other embodiments, alternative configurations, different or additional components may be included in the DNN accelerator 200. For instance, the DNN accelerator 200 may include more than one memory 210 or 240, more than one DMA engine 220, or more than one PE array 230. As another example, the memory 240 may be partially or wholly outside the PE array 230. Further, functionality attributed to a component of the DNN accelerator 200 may be accomplished by a different component included in the DNN accelerator 200 or by a different system.

The memory 210 stores data to be used by the PE array 230 to perform deep learning operations in DNN models. Example deep learning operations include convolutions (also referred to as "convolutional operations"), pooling operations, elementwise operations, other types of deep learning operations, or some combination thereof. The memory 210 may be a main memory of the DNN accelerator 200. In some embodiments, the memory 210 includes one or more DRAMs (dynamic random-access memory).

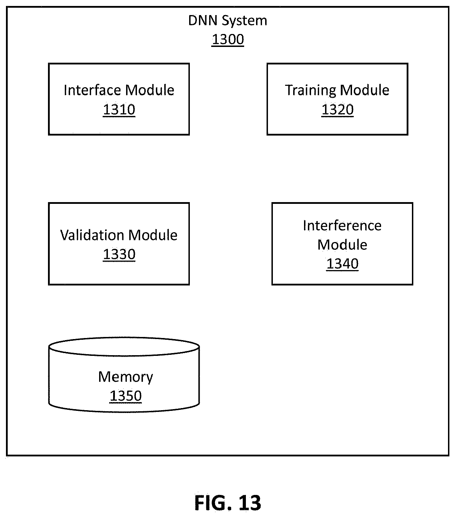

In embodiments where the memory 210 stores data for a convolution, the memory 210 stores a weight tensor for the convolution. The weight tensor can be read from the memory 210 and written into the memory 240 through the DMA engine 220. The weight tensor includes weights in one or more convolutional kernels based on which the convolution is to be executed. The values of the weights can be determined by training the DNN, e.g., by the training module 1320 in FIG. 13. The weight tensor may have a 3D layout. For instance, the weights in the weight tensor are arranged in a 3D matrix. The weight tensor may be denoted as:

$$W \in R^{C_{in} \times F \times C_{out}}$$

$$F = Fx * Fy$$

where *W* is the weight tensor, F is a spatial size of the convolutional kernel, *Fx* is the row length of the convolution kernel, *Fy* is the column length of the convolutional kernel, $C_{in}$ is the number of input channels in an input tensor of the convolution, $C_{out}$ is the number of output channels in an output tensor of the convolution. In some

embodiments, $C_{in}$ is the row length of the weight tensor, and $F$ is the column length of the weight tensor. $F$, $C_{in}$ and $C_{out}$ may be integers.

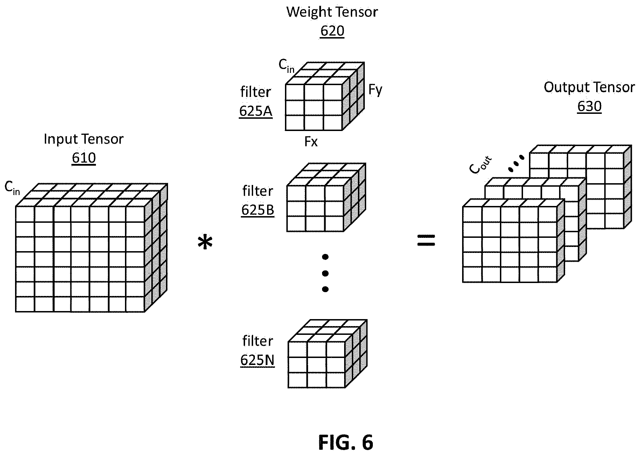

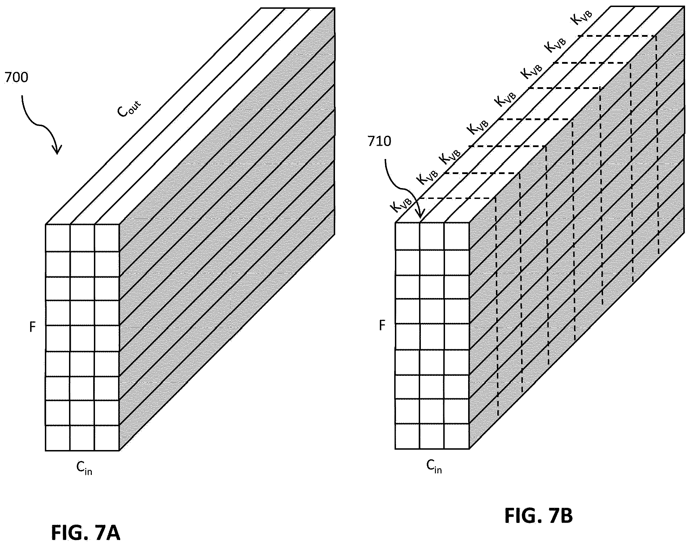

In some embodiments, the layout of the weight tensor can be changed, e.g., by the DMA engine 220, in a way optimized for the PE array 230. The layout of the weight tensor can be changed in different ways that are optimized for different PE arrays. Examples of the weight tensor include the filter 150 in FIG. 1, the weight tensor 620 in FIG. 6, and the weight tensor 700 in FIG. 7.

In some embodiments, the memory 210 may also store the input tensor and output tensor of the convolution. The output tensor can be transmitted from the memory 240 to the memory 210 through the DMA engine 220. In other embodiments, the input tensor or output tensor is not stored in the memory 210. For instance, the input tensor may be directly transmitted from an internal memory of another PE array to the memory 240 in the PE array 230. The output tensor may be directly transmitted from the memory 240 in the PE array 230 into an internal memory of another PE array. The input tensor may be a 3D matrix and include $C_{in}$ input channels. Examples of the input tensor include the input tensor 140 in FIG. 1 and the input tensor 610 in FIG. 6. The output tensor may be a 3D matrix and include $C_{out}$ output channels. Examples of the output tensor include the output tensor 160 in FIG. 1 and the output 630 in FIG. 6.

The DMA engine 220 facilitates data transfer between the memory 210 and the memory 240. For example, the DMA engine 220 can read data from the memory 210 and write data into the memory 240. As another example, the DMA engine 220 can read data from the memory 240 and write data into the memory 210. The DMA engine 220 provides a DMA feature that allows the PE array 230 to initiate data transfer between the memory 210 and the memory 240 and to perform other operations while the data transfer is in program. The DMA engine 220 can read weight tensors from the memory 210, rearrange the layouts of the weight tensors in a way that is optimized for the PE array 230 before it writes the weight tensor into the memory 240. For instance, the DMA engine 220 can change the 3D layout of a weight tensor to a linear layout.

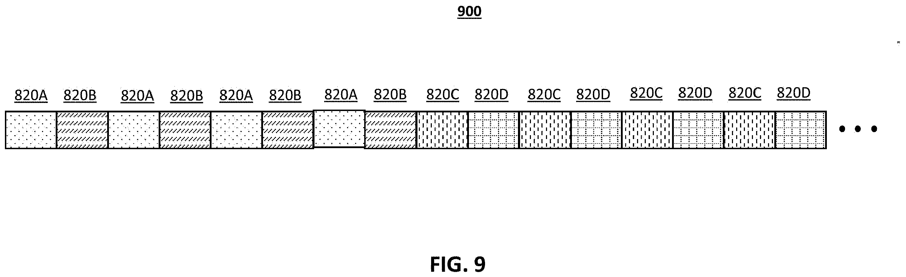

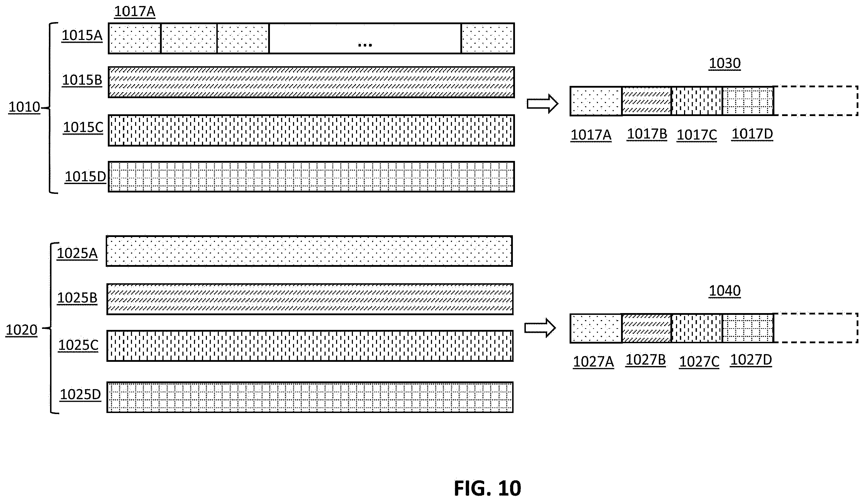

In some embodiments, the DMA engine 220 partitions a weight tensor for a convolution into a plurality of virtual banks based on a structure of the PE array 230. The DMA engine 220 can further partition each virtual bank into virtual sub-banks. The DMA engine 220 may perform the partition in the output channel dimension of the weight tensor. The DMA engine 220 further identifies data blocks in each virtual sub-bank and reshuffle all the data blocks of a virtual bank to form a linear data structure for the virtual bank. Through the reshuffling by the DMA engine 220, the data blocks are arranged linearly in the linear data structure. The data blocks in the linear data structure may be organized sequentially in the linear data structure, where the data blocks are linked to one after the other. Data blocks from different virtual sub-banks are interleaved in the linear data structure. For instance, two (or more) adjacent data blocks in the linear data structure may come from two (or more) different virtual sub-banks. Examples of the linear data structure include the linear data structure 900 in FIG. 9 and the linear data structures 1030 and 1040 in FIG. 10.

In some embodiments, before identifying and reshuffling data blocks, the DMA engine 220 may compress data in some or all of the virtual sub-banks by reducing sparsity in these virtual sub-banks. For instance, the DMA engine 220 may remove weights that have zero values from the virtual sub-bank. The weights in the compressed virtual sub-bank may all have non-zero values. The DMA engine 220 may also transpose the weight tensor after determining that the row length of the weight tensor is not $C_{in}$ or that the column length of the weight tensor is not $F$. Taking a virtual sub-bank denoted as $VSB$ E $R^{F \times C_{in} \times K}$ for example, the DMA engine 220 can transpose the virtual sub-bank into a new virtual sub-bank $VSB'$ E $R^{C_{in} \times F \times K}$, where $K$ denotes the number of output channels in the virtual sub-bank.

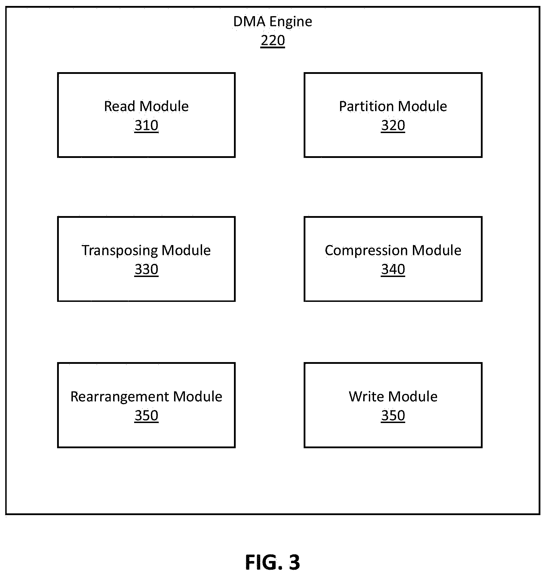

In some embodiments, the DMA engine 220 performs the reshuffling at a bank size graduality. For instance, the data blocks have a predetermined size. The predetermined size may be a bank size, i.e., the size of a memory bank. The memory bank may be a bank in the memory 240. In an example, the bank size is 32 bytes. As a weight tensor includes multiple virtual banks, the DMA engine 220 can form multiple linear data structures. After the linear data structures of a weight tensor is formed, the DMA engine 220 may write the linear data structures into the memory 240. More details regarding the DMA engine 220 are described below in conjunction with FIG. 3.

The PE array 230 includes a plurality of PEs. The PEs may be arranged in columns, or columns and rows. The PE array 230 may be a tile, or a portion of a tile, of a DNN layer having a tile architecture. The DNN layer may include one or more other PE arrays that may operate in parallel with the PE array 230. The PE array may perform convolutions, e.g., standard convolution or depthwise convolution. In some embodiments, the PE array 230 receive an input tensor and a weight tensor and performs MAC operations with the input tensor and weight tensor. The weight tensor may be in a linear form. For instance, the weight tensor has been rearranged to a group of linear data structure. The result of the MAC operations may be an output tensor, which can be further computed, e.g., by another PE array. The input tensor, weight tensor, and output tensor may be stored in the memory 240.

The memory 240 is local to the PE array 230. In the embodiments of FIG. 2, the memory 240 is inside the PE array 230. In other embodiments, the memory 240 may be outside the PE array 230. The memory 240 and the PE array 230 can be implemented on the same chip. In some embodiments, the memory 240 includes one or more SRAMs (static random-access memories).

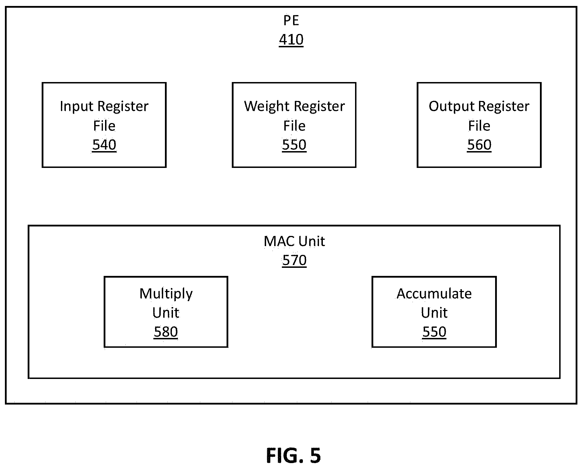

The memory 240 may be register files, e.g., register files 540, 550, and 560 in FIG. 5. In some embodiments, the memory 240 may also include one or more cache memories. The memory 240 stores data used for or generated from convolutions, e.g., input tensors, weight tensors, and output tensors. An input tensor or weight tensor may be written into the memory 240 by the DMA engine 220. A weight tensor stored in the memory 240 may have been rearranged by the DMA engine 220 into one or more linear data structures. An output tensor may be loaded into the memory 240 by the PEs in the PE array 230.

FIG. 3 is a block diagram of the DMA engine 220, in accordance with various embodiments. The DMA engine 220 includes a read module 310, a partition module 320, a transposing module 330, a compression module 340, a rearrangement module 350, and a write module 360. In other embodiments, alternative configurations, different or additional components may be included in the DMA engine 220. For instance, the DMA engine 220 may include no compression module 340. Further, functionality attributed to a component of the DNN accelerator 200 may be accomplished by a different component included in the DMA engine 220 or by a different system.

The read module 310 read data from the memory 210 or the memory 240. For instance, the read module 310 may read weight tensors from the memory 210. The read module 310 may read data at a predetermined rate, examples of which include 32 bytes/cycle or 64 bytes/cycle, and so on. A weight tensor read by the read module 310 may include weights arranged in a 3D matrix. The spatial size of the 3D matrix may be defined by three dimensions along three axes, respectively. For instance, the weight tensor may have a first dimension determined based on the number of input channels in an input tensor of a convolution in which the weight tensor is to be used, a second dimension determined based on based on the size of a kernel for the convolution, and a third dimension determined based on the number of output channels in an output tensor of the convolution. For an example weight tensor $W \in R^{C_{in} \times F \times C_{out}}$, the first dimension is $C_{in}$, the second dimension is $F$, and the third dimension is $C_{out}$. The read module 310 may provide the weight tensor to the partition module 320 for further processing.

The partition module 320 partitions the weight tensor into a sequence of virtual banks. The partition module 320 may partition the weight tensor based on the structure of the PE array 230. For instance, the partition module 320 determines how many PE columns in the PE array 230 will need weight data for MAC operations. A PE column, which includes one or more PEs that will perform MAC operations with part of the weight tensor, is considered an activated PE column. The partition module 320 may obtain the number of activated PE columns in the PE array 230. The number of activated PE columns may vary for different convolutions. In some embodiments, the partition module 320 determines a first partition factor P that equals the number of activated PE columns and use the first partition factor P to divide the weight tensor. The partition module 320 may evenly split the weight tensor into P virtual banks. A virtual bank corresponds to the volume of weight data to be fed into one activated PE column. The weight data in different virtual banks can used by different PE columns for MAC operations.

In some embodiments, the partition module 320 splits the weight tensor in the output channel dimension. In embodiments where the weight tensor is denoted as $W$ E $R^{C_{in} \times F \times C_{out}}$, each virtual bank of the weight tensor can be denoted as $VB \in R^{C_{in} \times F \times K_{VB}}$, where $K_{VB} = C_{out}/P$. The virtual banks have the same kernel size (i.e., column length) $F$ and the same number of input channels (i.e., row length) $C_{in}$ as the weight tensor. In an example, where the total number of output channels in the weight tensor is 256 and the first partition factor is 16, the partition module 320 partitions the weight tensor into 16 virtual banks. More details regarding partitioning weight tensor are described below in conjunction with FIG. 7.

The partition module 320 may further partition each virtual bank into virtual sub-banks. A virtual sub-bank may correspond to the volume of weight data to be fed to one MAC lane of a PE column. In some embodiments, the partition module 320 may determine a second partition factor p. The second partition factor p may equal the number of MAC lanes of a PE column, which may depend on the number of activated PEs in the PE column. An activated PE is a PE that performs one or more MAC operations for the convolution. A MAC lane is a path for loading data into a PE column. A MAC lane may be also referred to as a data transmission lane or data loading lane. A PE column may have multiple MAC lanes. The loading bandwidth of the PE column is an aggregation of the loading bandwidths of all the MAC lanes associated with the PE column. With a certain number of MAC lanes, data can be fed into the same number of independent MAC units simultaneously. These independent MAC units may be in the same PE. In some embodiments where a PE column has four MAC lanes for feeding activations or weights into the PE column and each MAC lane may have a bandwidth of 16 bytes, the four MAC lanes can have a total loading bandwidth of 64 bytes. In an embodiment where the activation or weight data was unicasted, four MAC units in one PE may receive the data. In another embodiment where the activation or weight data was multicoated, up to eight PEs and four MAC units in these PEs may receive the data. In some embodiments, the data reuse pattern of the DNN accelerator may determine how many PEs with four MAC units can receive the data.

The partition module 320 may split a virtual bank in the output channel dimension based on the second partition factor. The virtual sub-banks may have the same kernel size and the same number of input channels as the virtual bank, but the number of output channels in a virtual sub-bank may be an integral divisor of the number of output channels in the virtual bank. For instance, the number of output channels in a virtual sub-bank may equal the number of output channels in the virtual bank divided by the second partition factor.

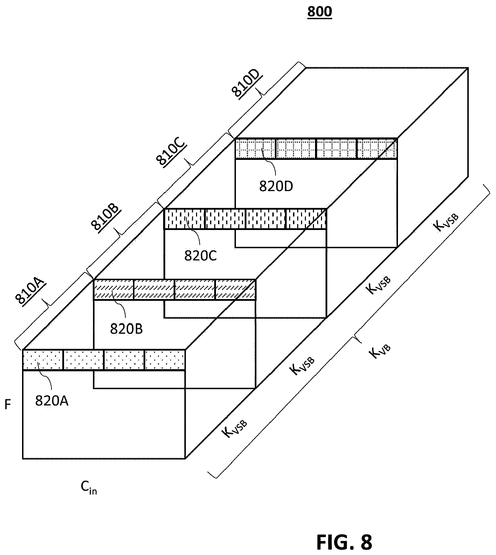

In embodiments where the virtual bank is denoted as $VB \in R^{C_{in} \times F \times K_{VB}}$, each virtual sub-bank of the virtual bank can be denoted as $VSB\ E\ R^{C_{in} \times F \times K_{VSB}}$, where $K_{VSB} = K_{VB}/p$. The virtual sub-banks have the same kernel size (i.e., column length) $F$ and the same number of input channels (i.e., row length) $C_{in}$ as the virtual bank and the weight tensor. In an example, where the total number of output channels in the weight tensor is 256 and the first partition factor is 16, the partition module 320 partitions the weight tensor into 16 virtual banks. More details regarding partitioning virtual bank are described below in conjunction with FIG. 8.

The transposing module 330 may transpose virtual sub-banks generated by the partition module 320. The transposing module 330 may determine whether the 3D structure of a virtual sub-bank meets a predetermined requirement. For instance, the transposing module 330 determines whether the row length of the virtual sub-bank is the number of input channels or whether the column length of the virtual sub-bank is the kernel size. In embodiments where the transposing module 330 determines that the row length is not the number of input channels or that the column length is not the kernel size, the transposing module 330 switches the rows and columns in the virtual sub-bank. For a virtual sub-bank $VSB \in R^{F \times C_{in} \times K_{VSB}}$ for example, the DMA engine 220 can transpose the virtual sub-bank into a new virtual sub-bank $VSB' \in R^{Cin \times F \times KVSB}$.

The transposing module 330 may use a transposing filter to identify a row or column and then convert the row or column into a column or row. The transposing filter may be a 1×1 filter, 5×5 filter, 11×11 filter, or a filter of a different size. In embodiments where the transposing filter is a 1×1 filter, the transposing module 330 may function as a buffer. In embodiments where the transposing module 330 determines that the row length is the number of input channels or that the column length is the kernel size, the transposing module 330 does not transpose the virtual sub-bank and may provide the virtual sub-bank to the compression module 340 or the rearrangement module 350 as is.

The compression module 340 compresses weight data in virtual sub-banks generated by the partition module 320. In some embodiments, the compression module 340 may compress a virtual sub-bank by reducing sparsity in the virtual sub-bank. Sparsity is a measurement of the amount of zero values in data. The compression module 340 may identify, in the virtual sub-bank, weights that have zero values and remove these weights from the virtual sub-bank to generate a compressed virtual sub-bank. As zero values are removed, the compressed virtual sub-bank has a reduced sparsity. The weights in the compressed virtual sub-bank may all have non-zero values. By compressing the virtual sub-bank, the size of the virtual sub-bank is reduced. Also, less memory storage and less computation power would be needed for MAC operations performed with the virtual sub-bank. The efficiency of the MAC operations can be improved, while the energy consumption can be reduced.

The compression module 340 may further generate a sparsity bitmap (also referred to as "bitmap") for the virtual sub-bank. The bitmap includes a plurality of bitmap elements, each of which may correspond to a different weight in the virtual sub-bank. A value of a bitmap element is determined based at least on a value of the corresponding weight. For instance, for each weight having a non-zero value, the compression module 340 generates a one valued bitmap element. For each weight having a zero value, the compression module 340 generates a zero valued bitmap element. In some embodiments, the bitmap may be a 3D matrix that has the same spatial size as the virtual sub-bank. A position of a bitmap element in the bitmap may match the position of the corresponding weight in the virtual sub-bank.

The rearrangement module 350 identifies data blocks in virtual sub-banks generated from a virtual bank and interleaves the data blocks to form a linear data structure of the virtual bank. In some embodiments, the virtual sub-banks processed by the rearrangement module 350 are compressed virtual sub-banks provided by the compression module 340. In some embodiments, the rearrangement module 350 may interleave data blocks in the input channel dimension of the virtual sub-banks. For instance, for a given row in a virtual sub-bank, the rearrangement module 350 may identify a plurality of data blocks. The rearrangement module 350 may determining the number of input channels in one data block. The number of input channels in one data block may be an integral divisor of the total number of input channels in the virtual sub-bank. The number of data blocks in one row may equal the total number of input channels in the virtual sub-bank divided by the number of input channels in one data block. In an example where the total number of input channels in the virtual sub-bank is 64 and the number of input channels in one data block is 16, the number of data blocks at the given F is 4. A data block may include all the output channels in the virtual sub-bank. The rearrangement module 350 can identify data blocks from all the rows in the virtual sub-bank.

The rearrangement module 350 can reshuffle positions of the data blocks in a virtual bank to generate a linear data structure. The linear data structure may include all the data blocks from all the virtual sub-banks of the virtual bank. The rearrangement module 350 may determine an interleaving factor that specifies the number of output channels to be interleaved at a data block level to finish a given column, i.e., a given input channel. In some embodiments, the interleaving factor is an integer that is smaller than the number of virtual sub-banks in a virtual bank. In an embodiment where the virtual bank is split into 4 virtual sub-banks and the interleaving factor is 2, the rearrangement module 350 may interleave data blocks ("first data blocks") in the first row in a first virtual sub-bank with data blocks (second data blocks) in the first row in a second virtual sub-bank so that the first data blocks and the second data blocks alternative in the linear data structure. A first data block and a second data block immediately subsequent to the first data block in the linear data structure correspond to the same input channel.

After that, the rearrangement module 350 may then interleave data blocks ("third data blocks") in the first row in a third virtual sub-bank with data blocks (fourth data blocks) in the first row in a fourth virtual sub-bank so that the third data blocks and the fourth data blocks alternative in the linear data structure. A third data block and a fourth data block immediately subsequent to the third data block in the linear data structure correspond to the same input channel. The third data blocks and the fourth data blocks are arranged after the first data blocks and the third data blocks.

After the first rows in the 4 virtual sub-banks are finished, the rearrangement module 350 may interleave data blocks in the second rows in the 4 virtual sub-banks in the same ways as how the data blocks in the first rows are interleaved. The rearrangement module 350 can repeat this interleaving process till all the rows are finished. The rearrangement module 350 can obtain a linear data structure that includes all the data blocks in the virtual bank. The data blocks may be organized sequentially in the linear data structure. The rearrangement module 350 may form a linear data structure for an individual virtual bank. For a weight tensor partitioned into N virtual banks, the rearrangement module 350 can form N linear data structures so that the weight tensor having the 3D shape is converted to the linear data structure having a linear shape, which can be stored with single-level storage. Also, traversal of the weight data can be achieved through a single run.

In some embodiments (such as embodiments where the virtual sub-banks are compressed by reducing sparsity), the rearrangement module 350 may reshuffle data blocks in bitmaps of the virtual sub-banks, e.g., in a similar way as how the virtual sub-banks are interleaved, to form a linear data structure for the bitmaps. The rearrangement module 350 may reshuffle data blocks in bitmaps at a different granularity from the granularity at which the rearrangement module 350 may reshuffle data blocks in virtual sub-banks. In an embodiment, the rearrangement module 350 may reshuffle data blocks in bitmaps at a granularity of 2 bytes. The linear data structure for the bitmaps has a smaller size than the linear data structure of the virtual bank. More details regarding interleaving data blocks from different virtual sub-banks are provided below in conjunction with FIGs. 8-10.

The write module 360 write input tensors and linear data structures of weight tensors into the memory 240. In embodiments where the memory 240 includes input register files and weight register files. The write module 360 may write input data into the input register files and weight data into the weight register files. In embodiments where the weight data is in a linear data structure, the write module 360 may write the weight data in a single run. In some embodiments, the write module 360 writes the weight data in an individual linear data structure into weight register files in PEs arranged in one column of the PE array 230. The write module 360 may write data in a predetermined rate, such as 32 bytes/cycle, 64 bytes/cycle, and so on.

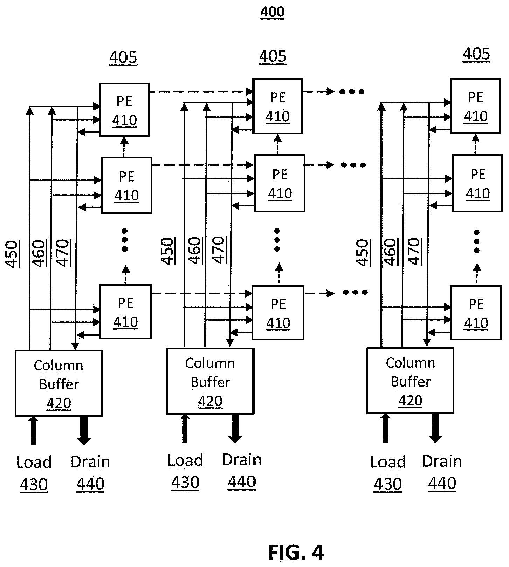

FIG. 4 illustrates a PE array 400, in accordance with various embodiments. The PE array 400 is an embodiment of the PE array 230 in FIG. 2. The PE array 400 includes a plurality of PEs 410 (individually referred to as "PE 410"). The PEs 410 perform MAC operations, such as integer MAC operations, floating-point MAC operations, and so on. The PEs 410 may also be referred to as neurons or nodes in the DNN. Each PE 410 has 2 input signals 450 and 460 and an output signal 470. The input signal 450 is at least a portion of an input tensor of a convolution. The input signal 460 is at least a portion of a weight tensor of the convolution. In some embodiments, the input signal 450 of a PE 410 includes one or more input operands, and the input signal 460 includes one or more weight operands.

Each PE 410 performs an MAC operation on the input signals 450 and 460 and outputs the output signal 470, which is a result of the MAC operation. Some or all of the input signals 450 and 460 and the output signal 470 may be in an integer format, such as INT8, or floating-point format, such as FP16 or BF16. For purpose of simplicity and illustration, the input signals and output signal of all the PEs 410 have the same reference numbers, but the PEs 410 may receive different input signals and output different output signals from each other. Also, a PE 410 may be different from another PE 410, e.g., including more, fewer, or different components.

As shown in FIG. 4, the PEs 410 are connected to each other, as indicated by the dash arrows in FIG. 4. The output signal 470 of an PE 410 may be sent to many other PEs 410 (and possibly back to itself) as input signals via the interconnections between PEs 410. In some embodiments, the output signal 470 of an PE 410 may incorporate the output signals of one or more other PEs 410 through an accumulate operation of the PE 410 and generates an internal partial sum of the PE array. Certain aspects of the PEs 410 are described below in conjunction with FIG. 5.

In the embodiments of FIG. 4, the PEs 410 are arranged into columns 405 (individually referred to as "column 405" or "PE column 405"). The input and weights of the layer may be distributed to the PEs 410 based on the columns 405. Each column 405 has a column buffer 420. The column buffer 420 stores data provided to the PEs 410 in the column 405 for a short amount of time. The column buffer 420 may also store data output by the last PE 410 in the column 405. The output of the last PE 410 may be a sum of the MAC operations of all the PEs 410 in the column 405, which is a column-level internal partial sum of the PE array 400. In other embodiments, input and weights may be distributed to the PEs 410 based on rows in the PE array 400. The PE array 400 may include row buffers in lieu of column buffers 420. A row buffer may store input signals of the PEs in the corresponding row and may also store a row-level internal partial sum of the PE array 400.

As shown in FIG. 4, each column buffer 420 is associated with a load 430 and a drain 440. The data provided to the column 405 is transmitted to the column buffer 420 through the load 430, e.g., through upper memory hierarchies, e.g., the memory 210 in FIG. 2. The data generated by the column 405 is extracted from the column buffers 420 through the drain 440. In some embodiments, data extracted from a column buffer 420 is sent to upper memory hierarchies, e.g., the memory 210 in FIG. 2, through the drain operation. In some embodiments, the drain operation does not start until all the PEs 410 in the column 405 has finished their MAC operations. In some embodiments, the load 430 or drain 440 may be controlled by the DMA engine 220 in FIG. 2.

FIG. 5 is a block diagram of a PE 410, in accordance with various embodiments. The PE 410 in FIG. 4 includes an input register file 540, a weight register file 550, an output register file 560, and a MAC unit 570. In other embodiments, the PE 410 may include fewer, more, or different components. For instance, the PE 410 may include multiple MAC units 570.

The input register file 540 temporarily stores input signals (e.g., contexts) received by the PE 410. The input feature data may include input feature data and output signals from other PEs 510. The weight register file 550 temporarily stores weights received by the PE 410. The output register file 560 temporarily stores output signals generated by the PE 410. For purpose of illustration and simplicity, the PE 410 in FIG. 5B includes one input register file 540, one weight register file 550, one output register file 560. In other embodiments, a PE 410 may include multiple register files for each type of data. In some embodiments, the input register file 540, weight register file 550, and output register file 560 are part of the memory 240.

The MAC unit 570 performs MAC operations on data in the input register file 540 and weight register file 550. The MAC unit 570 includes a multiply unit 580 and an accumulate unit 590. The multiply unit 580 performs multiply operations on input feature data in the input register file 540 and weights in the weight register file 550. The amount of time needed by the multiply unit 580 for a multiple operation depends on the sparsity level of the weights used in the multiple operation. If the weights are denser (i.e., the sparsity level is lower), the multiply unit 580 needs more time to perform the multiple operation. The accumulate unit 590 performs accumulate operations on the output of the multiply unit 580 and outputs signals from other PEs. The output of the accumulate unit 590 is the output signal of the PE 410. More details regarding MAC operations in PE are described below in conjunction with FIGs. 6 and 7.

*Example Convolution*

FIG. 6 illustrates an example convolution, in accordance with various embodiments. The convolution may be a convolution in a convolutional layer of a DNN, e.g., a convolutional layer 110 in FIG. 1. The convolution can be executed on an input tensor 610 and a weight tensor 620. In some embodiments, the convolution is performed by a PE array, such as the PE array 230 in FIG. 2 or the PE array 400 in FIG. 4.

In the embodiments of FIG. 6, the input tensor 610 is a 3D matrix in which input elements are arranged. For purpose of simplicity and illustration, the input tensor 610 includes $C_{in}$ = 3 input channels. Each input channel includes a 7×7 2D matrix. The input tensor 610 has a spatial size of 7×7×3. The weight tensor 620 includes *N* filters 625A-N (collectively referred to as "filters 625" or "filter 625"). A filter 625 has a spatial size of 3×3×3, i.e., the filter 625 includes 3 convolutional kernels with a spatial size of 3×3. The number of channels in a filter 625 may equal the number of input channels in the input tensor 610. The spatial size of the convolutional kernels (i.e., $Fx * Fy$) is smaller than the corresponding spatial size of the 2D matrix in the input tensor 610.

In the convolution, each filter 625 slides across the input tensor 610 and generates a 2D matrix for an output channel in the output tensor 630. In the embodiments of FIG. 6, the 2-D matrix has a spatial size of 5×5. As there are *N* filters 625, the number of output channels $C_{out}$ equals *N*. The result of the convolution is a 3D matrix having a spatial size of 5×5×N. The weight tensor 620 may be represented as one 3D matrix, an example of which is shown in FIG. 7.

*Example Weight Layout Rearrangement*

FIG. 7A illustrates an example weight tensor 700, in accordance with various embodiments. FIG. 7B illustrates virtual banks 720 generated from the weight tensor 700, in accordance with various embodiments. The virtual banks 710 can be individually referred to as "virtual bank 710." The weight tenor 700 may be an embodiment of the weight tensor 620 in FIG. 6. The weight tensor 700 includes weights (e.g., all the weights) needed for a convolutional operation on an input tensor by a PE array, e.g., the PE array 230 in FIG. 2 or the PE array 400 in FIG. 4, for producing an output tensor.

As shown in FIG. 7A, the weight tensor 700 is a 3D matrix. The weight tensor 700 has three dimensions. The first dimension $C_{in}$ is the number of input channels in the input tensor. The second dimension *F* is the spatial size of a kernel of the convolution. The third dimension $C_{out}$ is the number of output channels in the output channel. For purpose of simplicity and illustration, the weight tensor 700 has the same spatial size as the weight tensor 620 in FIG. 6, so t$C_{in}$ = 3, *F* = 9, and $C_{out} = N$.

The weights in the weight tensor 700 are to be fed into the PE array for the convolution. Before the weights are sent to the PE array, the layout of the weight tensor 700 is changed in a way for optimizing performance and efficiency of the PE array. The change of the layout starts with partition of the weight tensor into the virtual banks 710. As shown in FIG. 7B, the weight tensor 700 is divided in the $C_{out}$ dimension. Each virtual bank 710 is a portion of the weight tensor 700 and includes a subset of the output channels in the weight tensor 700. The first dimension (row length) and the second dimension (column length) of each virtual bank 710 is the same as the first dimension and the second dimension, respectively, of the weight tensor 700. The third dimension of each virtual bank 710 is denoted as $K_{VB}$ in FIG. 7. As there are 8 virtual banks 710 in total, $K_{VB} = C_{out}/8$.

For purpose of simplicity and illustration, the weight tensor 700 is divided into eight virtual banks 710 in FIG. 7B. In other embodiments, the weight tensor 700 can be divided into a different number of virtual banks 710. The number of virtual banks 710 of the weight tensor 700 may be determined based on the number of activated PE columns in the PE array during the convolution. Each virtual bank 710 may be provided to a different PE column and used by one or more PEs in the PE column for MAC operations. Also, the rearrangement of the layout of the weight tensor 700 is performed at a virtual bank level. For instance, every individual virtual bank is rearranged to form a linear data structure. As the weight tensor 700 has 8 virtual banks 710, 8 linear data structures will be formed and fed into the corresponding PE columns. Certain aspects of rearranging weight layout are described below in conjunction with FIGs. 8-10.

FIG. 8 illustrates partitioning a virtual bank 800 into virtual sub-banks 810A-D, in accordance with various embodiments. The virtual bank 800 may be a virtual bank 710 in FIG. 7. In FIG. 8, the virtual bank 800 is divided into 4 virtual sub-banks 810A-D (collectively referred to as "virtual sub-banks 810" or "virtual sub-bank 810"), e.g., based on a partition factor $p = 4$. In other embodiments, the virtual bank 800 can be divided into a different number of virtual sub-banks. In some embodiments, the number of virtual sub-banks in a virtual bank 800 is determined based on the number of MAC lanes associated with a PE column to which the virtual bank 800 is to be transmitted. In an example where there are four MAC lanes, the virtual bank 800 can be divided into four virtual sub-banks.

As shown in FIG. 8, the virtual bank 800 is divided in the $K_{VB}$ dimension. Each virtual sub-bank 810 is a portion of the virtual bank 800 and includes a subset of the output channels in the virtual bank 800. The first dimension (row length) and the second dimension (column length) of each virtual sub-bank 810 is the same as the first dimension and the second dimension, respectively, of the virtual bank 800. The third dimension of each virtual sub-bank 810 is denoted as $K_{VSB}$ in FIG. 8. As there are 4 virtual sub-banks 810 in total, $K_{VSB} = K_{VB}/4$.

Data blocks are identified in each virtual sub-bank 810. For purpose of simplicity and illustration, FIG. 8 shows data blocks in the first row of each virtual sub-bank 810. In embodiments where the spatial size of the convolutional kernel is 1×1, a virtual sub-bank 810 has one row. In other embodiments, a virtual sub-bank 810 has multiple rows and data blocks can be identified from each of the rows. FIG. 8 shows four data blocks 820A (individually referred to as "data block 820A") in the virtual sub-bank 810A, four data blocks 820B (individually referred to as "data block 820B") in the virtual sub-bank 810B, four data blocks 820C (individually referred to as "data block 820C") in the virtual sub-bank 810C, and four data blocks 820D (individually referred to as "data block 820A") in the virtual sub-bank 810D. In some embodiments, the data blocks have a predetermined storage size. An example storage size of the data blocks is the size of a memory bank for storing an individual data block. The bank size may be 32 bytes.

Each data block can include a predetermined number of input channels $C_{in_DB}$. $C_{in_DB}$ may be an integral divisor of the total number of input channels $C_{in}$ in the input tensor. The number of data blocks in an individual row in each virtual sub-bank 810 would be $C_{in}/C_{inDB}$. In an example where $C_{in}$ is 64 and $C_{in_DB}$ is 16 (i.e., each data block includes 16 input channels), there are 4 data blocks in an individual row for an individual output channel of the virtual sub-bank 810. Each data block may have a spatial size of $C_{in_DB} \times 1 \times 1$. In an embodiment where a virtual sub-bank 810 has F rows and $K_{VSB}$ output channels, the total number of data blocks in virtual sub-bank 810 is $(C_{in}/C_{inDB}) * F * K_{VSB}$. The total number of data blocks in the virtual bank 800 is $(C_{in}/C_{inDB}) * F * K_{VB}$. All the $(C_{in}/C_{inDB}) * F * K_{VB}$ data blocks will be interleaved to form a linear data structure.

FIG. 9 illustrates an example linear data structure 900, in accordance with various embodiments. The linear data structure 900 is converted from the virtual bank 800 in FIG. 8 through rearranging the layout of weight data in the virtual bank 800. The linear data structure 900 includes data blocks 820A, 820B, 820C, and 820D that are arranged linearly in a sequence. The data blocks 820A, 820B, 820C, and 820D are linked to one another. For purpose of simplicity of illustration, FIG. 9 shows the data blocks 820A, 820B, 820C, and 820D in the first row for the first output channel in each of the virtual sub-banks 810. The linear data structure 900 can include additional data blocks from other rows and other output channels of the virtual sub-banks 810.

The linear data structure 900 can be formed by interleaving the data blocks 820A, 820B, 820C, and 820D. The formation of the linear data structure 900 may be based on an interleaving factor. The interleaving factor specifies the number of output channels to be interleaved at a data block level to finish a given column, i.e., a given input channel. For purpose of simplicity and illustration, the interleaving factor in FIG. 9 is 2, i.e., two of the four virtual sub-banks 810 are interleaved to finish a given input channel. As there are four virtual sub-banks 810, the interleaving process starts with interleaving the data blocks 820A from the virtual sub-bank 810A with the data blocks 820B from the virtual sub-bank 810B. As shown in FIG. 9, the data blocks 820A alternate with the data blocks 820B. After the interleaving of the data blocks 820A and the data blocks 820B is done, the data blocks 820C from the virtual sub-bank 810C are interleaved with the data blocks 820D from the virtual sub-bank 810D, which leads to that the data blocks 820C alternate with the data blocks 820D.

In some embodiments (e.g., embodiments where the convolutional filter is a 1×1 filter), the linear data structure 900 ends with the data block 820D. In other embodiments (e.g., embodiments where the convolutional filter is a larger filter), the linear data structure 900 includes other data blocks, which are illustrated by the dashed shape in FIG. 9. For instance, after the interleaving of all these 16 data blocks 820A, 820B, 820C, and 820D are finished, the data blocks corresponding to the next input channel within the virtual sub-banks 810 can be interleaved and added to the linear data structure 900 till all the data blocks in the four virtual sub-banks 810 are included in the linear data structure 900. The linear data structure 900 can be fed into a PE column, e.g., be written into register files in the activated PEs in the PE column.

FIG. 10 illustrate formation of linear data structures 1030 and 1040 through parallel data processing, in accordance with various embodiments. The linear data structures 1030 and 1040 are formed by parallelly processing virtual sub-banks in virtual banks. For purpose of simplicity and illustration, FIG. 10 shows two virtual banks 1010 and 1020, which can be produced by partitioning a weight tensor. The weight tensor may include additional virtual banks. The virtual bank 1010 include four virtual sub-banks. In the embodiments of FIG. 10, the virtual sub-banks are converted to linear data structures 1015A-1015D (collectively referred to as "linear data structures 1015" or "linear data structure 1015"). Each linear data structure 1015 corresponds to a different virtual sub-bank. Similarly, the virtual bank 1020 include four virtual sub-banks that are converted to linear data structures 1025A-1025D (collectively referred to as "linear data structures 1025" or "linear data structure 1025"). The conversion of the virtual sub-banks to the linear data structures 1015 and 1025 can be done in parallel to expedite the formation of the linear data structures 1030 and 1040.

Taking the linear data structures 1015 for example, each of the linear data structures 1015 can be formed through reshuffling data blocks in the corresponding virtual sub-bank. Taking the linear data structure 1015A for example, it includes a plurality of data blocks 1017A (individually referred to as "data block 1017A") that are arranged linearly. In some embodiments, the linear data structure 1015A may start with the data blocks 1017A from the first row and the first output channel in the 3D structure of the virtual sub-bank, followed by the data blocks 1017A from the second row and the first output channel in the 3D structure of the virtual sub-bank, till all the rows for the first output channel is processed. The last data block for the first output channel would be followed by the data blocks 1017A from all the rows of the second output channel in the 3D structure of the virtual sub-bank. This continues till all the output channels in the virtual sub-bank are processed.

In an example where the virtual sub-bank has $C_{in}$ columns, $F$ rows, and $K_{VSB}$ output channels, and each data block 1017A has $C_{inDB}$ input channels, the first $(C_{in}/C_{inDB})$ data blocks 1017A in the linear data structure 1015A are the data blocks corresponding to the first row and the first output channel. The first $(C_{in}/C_{inDB}) * F$ data blocks 1017A in the linear data structure are the data blocks corresponding to the first output channel. The next $(C_{in}/C_{inDB}) * F$ data blocks 1017A in the linear data structure 1015A are the data blocks corresponding to the second output channel. The total number of data blocks 1017A in the linear data structure 1015A is $(C_{in}/C_{inDB}) * F * K_{VSB}$.

The other virtual sub-banks in the virtual bank 1010 are also converted to linear data structures 1015B-1015D, which are shown in FIG. 10. The number of data blocks in each linear data structure 1015 may be $(C_{in}/C_{inDB}) * F * K_{VSB}$. Similarly, the virtual sub-banks in the virtual bank 1020 are also converted to the linear data structures 1025. The number of data blocks in each linear data structure 1025 may also be $(C_{in}/C_{inDB}) * F * K_{VSB}$.

The linear data structure 1030 for the virtual bank 1010 can be formed by interleaving data blocks in the linear data structures 1015. In the embodiments of FIG. 10, the interleaving factor is 4, so the first group of data blocks in the linear data structure 1030 includes the first data block 1017A in the linear data structure 1015A, the first data block 1017B in the linear data structure 1015B, the first data block 1017C in the linear data structure 1015C, the first data block 1017D in the linear data structure 1015D, which are arranged sequentially. The linear data structure 1030 can include additional data blocks, which are represented by the dashed box in FIG. 10.

Similarly, the linear data structure 1040 for the virtual bank 1020 can be formed by interleaving data blocks in the linear data structures 1025. In the embodiments of FIG. 10, the interleaving factor is 4, so the first group of data blocks in the linear data structure 1030 includes the first data block 1027A in the linear data structure 1025A, the first data block 1027B in the linear data structure 1025B, the first data block 1027C in the linear data structure 1025C, the first data block 1027D in the linear data structure 1025D, which are arranged sequentially. The linear data structure 1030 can include additional data blocks, which are represented by the dashed box in FIG. 10.

As the virtual sub-banks in the virtual banks 1010 and 1020 are processed in parallel to form the linear data structures 1015 and 1025, the efficiency in forming the linear data structures 1030 and 1040 can be improved. In embodiments where the weight tensor includes more virtual banks or each virtual bank includes more virtual sub-banks, the DMA engine 220 may support parallel processing of more virtual sub-banks.

*Example Method of Deep Learning*

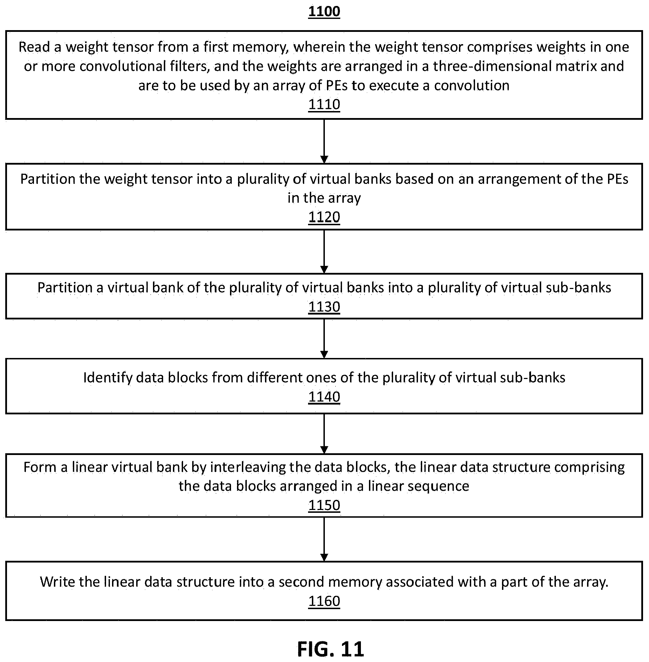

FIG. 11 is a flowchart showing a method 1100 of deep learning, in accordance with various embodiments. The method 1100 may be performed by the DMA engine 220 in FIG. 2. Although the method 1100 is described with reference to the flowchart illustrated in FIG. 11, many other methods for deep learning may alternatively be used. For example, the order of execution of the steps in FIG. 11 may be changed. As another example, some of the steps may be changed, eliminated, or combined.

The DMA engine 220 read 1110 a weight tensor from a first memory. The weight tensor comprises weights in one or more convolutional filters. The weights are arranged in a 3D matrix. The weights are to be used by an array of PEs to execute a convolution. The 3D matrix has a first dimension determined based on a number of input channels in the input tensor, a second dimension determined based on a size of the one or more convolutional filters, and a third dimension determined based on a number of output channels in the output tensor. The array of PEs may be the PE array 230 in FIG. 2 or the PE array 400 in FIG. 4.

The DMA engine 220 partitions 1120 the weight tensor into a plurality of virtual banks based on an arrangement of the PEs in the array. In some embodiments, the array of PEs comprises PEs arranged in columns. Each respective virtual bank of the plurality of virtual banks may correspond to a different one of the columns. The array of PEs constitutes at least part of a convolutional layer in a DNN and is to perform the convolution on the weights and an input tensor to generate an output tensor. The DMA engine 220 may partition the weight tensor based on the number of active PE columns in the PE array. An active PE column includes one or more PEs that perform MAC operations for the convolution. In some embodiments, the DMA engine 220 partitions the weight tensor in the output dimension of the weight tensor. In some embodiments, the DMA engine 220 partitions the weight tensor into $P$ number of virtual banks, and $P$ is an integer that is not larger than the total number of PE columns in the array.

The DMA engine 220 partitions 1130 a virtual bank of the plurality of virtual banks into a plurality of virtual sub-banks. In some embodiments, the DMA engine 220 partitions the virtual bank in the output dimension of the virtual bank. A dimension of a virtual sub-bank may equal an integral divisor of the number of output channels in the output tensor. The DMA engine 220 may partition the virtual bank based on the number of active PEs in the PE column corresponding the virtual bank. In some embodiments, the DMA engine 220 partitions the virtual bank into $p$ number of virtual sub-banks, and $p$ is an integer that is not larger than 4.

The DMA engine 220 identifies 1140 data blocks from different ones of the plurality of virtual sub-banks. A data block has a dimension that equals a predetermined number of input channels. In some embodiments, the data blocks have a predetermined size, e.g., a size of a memory bank. In some embodiments, before identifying data blocks from different ones of the plurality of virtual sub-banks, the DMA engine 220 may remove weights having zero values from at least some of the plurality of virtual sub-banks to compress virtual sub-banks. The compression of virtual sub-banks can reduce the sparsity in the virtual sub-banks and increase efficiency in the execution of the convolution by the array of PEs. The DMA engine 220 may also generate a sparsity bitmap for a virtual sub-bank that is compressed.

In some embodiments, the DMA engine 220 may also transpose at least some of the plurality of virtual sub-banks to get the virtual sub-banks ready for interleaving. For instance, the DMA engine 220 may transpose rows in a virtual sub-bank into columns in the virtual sub-bank. The transposing process may ensure that the length of rows in the virtual sub-bank correspond to the number of input channels in the input tensor, and the length of columns in the virtual sub-bank correspond to the size of the convolutional kernel.

The DMA engine 220 forms 1150 a linear data structure by interleaving the data blocks. The linear data structure includes the data blocks arranged in a linear sequence. In some embodiments, the data blocks comprise first data blocks from a first virtual sub-bank of the plurality of virtual sub-banks and second data blocks from a second virtual sub-bank of the plurality of virtual sub-banks. The first data blocks alternate with the second data blocks in the linear data structure. Two adjacent data blocks in the linear data structure come from different virtual sub-banks. The interleaving is done at a data block level. In embodiments where the data blocks have a size of a memory bank, the interleaving is done at a bank size level. In embodiments where any of the virtual sub-banks are compressed, the DMA engine 220 may also interleave the bitmaps of the virtual sub-banks. The interleaving of the bitmaps may be done at a level of a predetermined number of bytes.

The DMA engine 220 writes 1160 the linear data structure into a second memory associated with a part of the array. The part of the array may be a PE column in the array, e.g., a PE column that is activated in the convolution. The second memory may be local to the array. In some embodiments, the second memory is inside the array, versus the first memory is outside the array. The second memory may include one or more register files. In an example, the second memory includes a SRAM, and the first memory includes a DRAM.

*Example Deep Learning Environment*

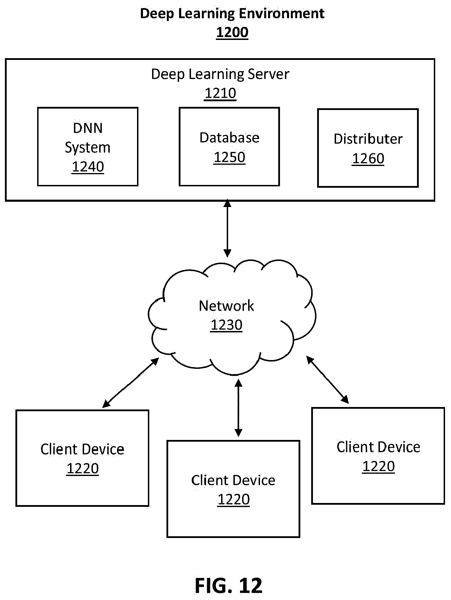

FIG. 12 illustrates a deep learning environment 1200, in accordance with various embodiments. The deep learning environment 1200 includes a deep learning server 1210 and a plurality of client devices 1220 (individually referred to as client device 1220). The deep learning server 1210 is connected to the client devices 1220 through a network 1230. In other embodiments, the deep learning environment 1200 may include fewer, more, or different components.

The deep learning server 1210 trains deep learning models using neural networks. A neural network is structured like the human brain and consists of artificial neurons, also known as nodes. These nodes are stacked next to each other in 3 types of layers: input layer, hidden layer(s), and output layer. Data provides each node with information in the form of inputs. The node multiplies the inputs with random weights, calculates them, and adds a bias. Finally, nonlinear functions, also known as activation functions, are applied to determine which neuron to fire. The deep learning server 1210 can use various types of neural networks, such as DNN, recurrent neural network (RNN), generative adversarial network (GAN), long short-term memory network (LSTMN), and so on. During the process of training the deep learning models, the neural networks use unknown elements in the input distribution to extract features, group objects, and discover useful data patterns. The deep learning models can be used to solve various problems, e.g., making predictions, classifying images, and so on. The deep learning server 1210 may build deep learning models specific to particular types of problems that need to be solved. A deep learning model is trained to receive an input and outputs the solution to the particular problem.

In FIG. 12, the deep learning server 1210 includes a DNN system 1240, a database 1250, and a distributer 1260. The DNN system 1240 trains DNNs. The DNNs can be used to process images, e.g., images captured by autonomous vehicles, medical devices, satellites, and so on. In an embodiment, a DNN receives an input image and outputs classifications of objects in the input image. An example of the DNNs is the DNN 100 described above in conjunction with FIG. 1. In some embodiments, the DNN system 1240 trains DNNs through knowledge distillation, e.g., dense-connection based knowledge distillation. The trained DNNs may be used on low memory systems, like mobile phones, IOT edge devices, and so on. An embodiment of the DNN system 1240 is the DNN accelerator 200 described above in conjunction with FIG. 2.

The database 1250 stores data received, used, generated, or otherwise associated with the deep learning server 1210. For example, the database 1250 stores a training dataset that the DNN system 1240 uses to train DNNs. In an embodiment, the training dataset is an image gallery that can be used to train a DNN for classifying images. The training dataset may include data received from the client devices 1220. As another example, the database 1250 stores hyperparameters of the neural networks built by the deep learning server 1210.

The distributer 1260 distributes deep learning models generated by the deep learning server 1210 to the client devices 1220. In some embodiments, the distributer 1260 receives a request for a DNN from a client device 1220 through the network 1230. The request may include a description of a problem that the client device 1220 needs to solve. The request may also include information of the client device 1220, such as information describing available computing resource on the client device. The information describing available computing resource on the client device 1220 can be information indicating network bandwidth, information indicating available memory size, information indicating processing power of the client device 1220, and so on. In an embodiment, the distributer may instruct the DNN system 1240 to generate a DNN in accordance with the request. The DNN system 1240 may generate a DNN based on the information in the request. For instance, the DNN system 1240 can determine the structure of the DNN and/or train the DNN in accordance with the request.

In another embodiment, the distributer 1260 may select the DNN from a group of pre-existing DNNs based on the request. The distributer 1260 may select a DNN for a particular client device 1220 based on the size of the DNN and available resources of the client device 1220. In embodiments where the distributer 1260 determines that the client device 1220 has limited memory or processing power, the distributer 1260 may select a compressed DNN for the client device 1220, as opposed to an uncompressed DNN that has a larger size. The distributer 1260 then transmits the DNN generated or selected for the client device 1220 to the client device 1220.

In some embodiments, the distributer 1260 may receive feedback from the client device 1220. For example, the distributer 1260 receives new training data from the client device 1220 and may send the new training data to the DNN system 1240 for further training the DNN. As another example, the feedback includes an update of the available computer resource on the client device 1220. The distributer 1260 may send a different DNN to the client device 1220 based on the update. For instance, after receiving the feedback indicating that the computing resources of the client device 1220 have been reduced, the distributer 1260 sends a DNN of a smaller size to the client device 1220.

The client devices 1220 receive DNNs from the distributer 1260 and applies the DNNs to perform machine learning tasks, e.g., to solve problems or answer questions. In various embodiments, the client devices 1220 input images into the DNNs and uses the output of the DNNs for various applications, e.g., visual reconstruction, augmented reality, robot localization and navigation, medical diagnosis, weather prediction, and so on. A client device 1220 may be one or more computing devices capable of receiving user input as well as transmitting and/or receiving data via the network 1230. In one embodiment, a client device 1220 is a conventional computer system, such as a desktop or a laptop computer. Alternatively, a client device 1220 may be a device having computer functionality, such as a personal digital assistant (PDA), a mobile telephone, a smartphone, an autonomous vehicle, or another suitable device. A client device 1220 is configured to communicate via the network 1230. In one embodiment, a client device 1220 executes an application allowing a user of the client device 1220 to interact with the deep learning server 1210 (e.g., the distributer 1260 of the deep learning server 1210). The client device 1220 may request DNNs or send feedback to the distributer 1260 through the application. For example, a client device 1220 executes a browser application to enable interaction between the client device 1220 and the deep learning server 1210 via the network 1230. In another embodiment, a client device 1220 interacts with the deep learning server 1210 through an application programming interface (API) running on a native operating system of the client device 1220, such as IOS® or ANDROID™.

In an embodiment, a client device 1220 is an integrated computing device that operates as a standalone network-enabled device. For example, the client device 1220 includes display, speakers, microphone, camera, and input device. In another embodiment, a client device 1220 is a computing device for coupling to an external media device such as a television or other external display and/or audio output system. In this embodiment, the client device 1220 may couple to the external media device via a wireless interface or wired interface (e.g., an HDMI (High-Definition Multimedia Interface) cable) and may utilize various functions of the external media device such as its display, speakers, microphone, camera, and input devices. Here, the client device 1220 may be configured to be compatible with a generic external media device that does not have specialized software, firmware, or hardware specifically for interacting with the client device 1220.

The network 1230 supports communications between the deep learning server 1210 and client devices 1220. The network 1230 may comprise any combination of local area and/or wide area networks, using both wired and/or wireless communication systems. In one embodiment, the network 1230 may use standard communications technologies and/or protocols. For example, the network 1230 may include communication links using technologies such as Ethernet, 12010.11, worldwide interoperability for microwave access (WiMAX), 3G, 4G, code division multiple access (CDMA), digital subscriber line (DSL), etc. Examples of networking protocols used for communicating via the network 1230 may include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 1230 may be represented using any suitable format, such as hypertext markup language (HTML) or extensible markup language (XML). In some embodiments, all or some of the communication links of the network 1230 may be encrypted using any suitable technique or techniques.

*Example DNN System*

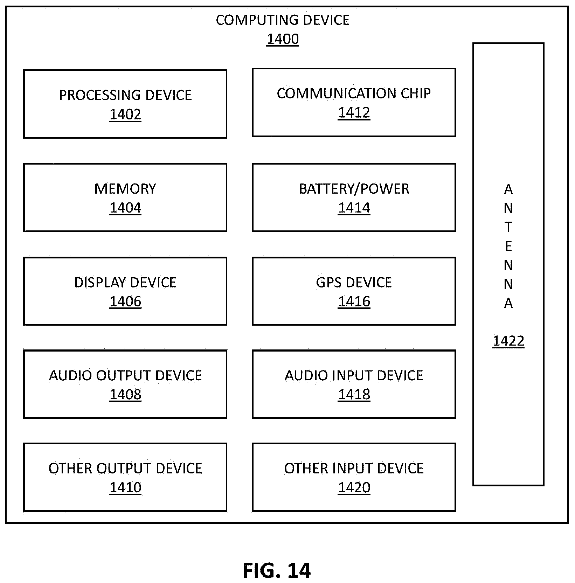

FIG. 13 is a block diagram of an example DNN system 1300, in accordance with various embodiments. The whole DNN system 1300 or a part of the DNN system 1300 may be implemented in the computing device 1400 in FIG. 14. The DNN system 1300 trains DNNs for various tasks, such as image classification, learning relationships between biological cells (e.g., DNA, proteins, etc.), control behaviors for devices (e.g., robots, machines, etc.), and so on. The DNN system 1300 includes an interface module 1310, a training module 1320, a validation module 1330, an inference module 1340, and a memory 1350. In other embodiments, alternative configurations, different or additional components may be included in the DNN system 1300. Further, functionality attributed to a component of the DNN system 1300 may be accomplished by a different component included in the DNN system 1300 or a different system. The DNN system 1300 or a component of the DNN system 1300 (e.g., the training module 1320 or inference module 1340) may include the computing device 1400.

The interface module 1310 facilitates communications of the DNN system 1300 with other systems. For example, the interface module 1310 establishes communications between the DNN system 1300 with an external database to receive data that can be used to train DNNs or input into DNNs to perform tasks. As another example, the interface module 1310 supports the DNN system 1300 to distribute DNNs to other systems, e.g., computing devices configured to apply DNNs to perform tasks.

The training module 1320 trains DNNs by using a training dataset. The training module 1320 forms the training dataset. In an embodiment where the training module 1320 trains an DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a validation subset used by the validation module 1330 to validate performance of a trained DNN. The portion of the training dataset not including the tuning subset and the validation subset may be used to train the DNN.

The training module 1320 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 13, 130, 500, 1300, or even larger.

The training module 1320 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different category by training.

In the process of defining the architecture of the DNN, the training module 1320 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 1320 defines the architecture of the DNN, the training module 1320 inputs a training dataset into the DNN. The training dataset includes a plurality of training samples. An example of a training sample includes an object in an image and a ground-truth label of the object. The training module 1320 modifies the parameters inside the DNN ("internal parameters of the DNN") to minimize the error between labels of the training objects that are generated by the DNN and the ground-truth labels of the objects. The internal parameters include weights of filters in the convolutional layers of the DNN. In some embodiments, the training module 1320 uses a cost function to minimize the error.

The training module 1320 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 1320 finishes the predetermined number of epochs, the training module 1320 may stop updating the parameters in the DNN. The DNN having the updated parameters is referred to as a trained DNN.

The validation module 1330 verifies accuracy of trained DNNs. In some embodiments, the validation module 1330 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 1330 determines may determine an accuracy score measuring the precision, recall, or a combination of precision and recall of the DNN. The validation module 1330 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 1330 may compare the accuracy score with a threshold score. In an example where the validation module 1330 determines that the accuracy score of the augmented model is lower than the threshold score, the validation module 1330 instructs the training module 1320 to re-train the DNN. In one embodiment, the training module 1320 may iteratively re-train the DNN until the occurrence of a stopping condition, such as the accuracy measurement indication that the DNN may be sufficiently accurate, or a number of training rounds having taken place.

The inference module 1340 applies the trained or validated DNN to perform tasks. For instance, the inference module 1340 inputs images into the DNN. The DNN outputs classifications of objects in the images. As an example, the DNN may be provisioned in a security setting to detect malicious or hazardous objects in images captured by security cameras. As another example, the DNN may be provisioned to detect objects (e.g., road signs, hazards, humans, pets, etc.) in images captured by cameras of an autonomous vehicle. The input to the DNN may be formatted according to a predefined input structure mirroring the way that the training dataset was provided to the DNN. The DNN may generate an output structure which may be, for example, a classification of the image, a listing of detected objects, a boundary of detected objects, or the like. In some embodiments, the inference module 1340 distributes the DNN to other systems, e.g., computing devices in communication with the DNN system 1300, for the other systems to apply the DNN to perform the tasks.

The memory 1350 stores data received, generated, used, or otherwise associated with the DNN system 1300. For example, the memory 1350 stores the datasets used by the training module 1320 and validation module 1330. The memory 1350 may also store data generated by the training module 1320 and validation module 1330, such as the hyperparameters for training DNNs, internal parameters of trained DNNs (e.g., values of tunable parameters of FALUs), etc. In the embodiment of FIG. 13, the memory 1350 is a component of the DNN system 1300. In other embodiments, the memory 1350 may be external to the DNN system 1300 and communicate with the DNN system 1300 through a network.

*Example Computing Device*

FIG. 14 is a block diagram of an example computing device 1400, in accordance with various embodiments. In some embodiments, the computing device 1400 can be used as the DNN system 1300 in FIG. 13. A number of components are illustrated in FIG. 14 as included in the computing device 1400, but any one or more of these components may be omitted or duplicated, as suitable for the application. In some embodiments, some or all of the components included in the computing device 1400 may be attached to one or more motherboards. In some embodiments, some or all of these components are fabricated onto a single system on a chip (SoC) die. Additionally, in various embodiments, the computing device 1400 may not include one or more of the components illustrated in FIG. 14, but the computing device 1400 may include interface circuitry for coupling to the one or more components. For example, the computing device 1400 may not include a display device 1406, but may include display device interface circuitry (e.g., a connector and driver circuitry) to which a display device 1406 may be coupled. In another set of examples, the computing device 1400 may not include an audio input device 1418 or an audio output device 1408, but may include audio input or output device interface circuitry (e.g., connectors and supporting circuitry) to which an audio input device 1418 or audio output device 1408 may be coupled.

The computing device 1400 may include a processing device 1402 (e.g., one or more processing devices). The processing device 1402 processes electronic data from registers and/or memory to transform that electronic data into other electronic data that may be stored in registers and/or memory. The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1404 may include memory that shares a die with the processing device 1402. In some embodiments, the memory 1404 includes one or more non-transitory computer-readable media storing instructions executable to perform operations for deep learning, e.g., the method 1100 described above in conjunction with FIG. 11 or some operations performed by the DNN accelerator described above in conjunction with FIG. 2 (e.g., operations performed by the DMA engine 220). The instructions stored in the one or more non-transitory computer-readable media may be executed by the processing device 2402.

In some embodiments, the computing device 1400 may include a communication chip 1412 (e.g., one or more communication chips). For example, the communication chip 1412 may be configured for managing wireless communications for the transfer of data to and from the computing device 1400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1412 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1412 may operate in accordance with CDMA, Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1412 may operate in accordance with other wireless protocols in other embodiments. The computing device 1400 may include an antenna 1422 to facilitate wireless communications and/or to receive other wireless communications (such as AM or FM radio transmissions).

In some embodiments, the communication chip 1412 may manage wired communications, such as electrical, optical, or any other suitable communication protocols (e.g., the Ethernet). As noted above, the communication chip 1412 may include multiple communication chips. For instance, a first communication chip 1412 may be dedicated to shorter-range wireless communications such as Wi-Fi or Bluetooth, and a second communication chip 1412 may be dedicated to longer-range wireless communications such as global positioning system (GPS), EDGE, GPRS, CDMA, WiMAX, LTE, EV-DO, or others. In some embodiments, a first communication chip 1412 may be dedicated to wireless communications, and a second communication chip 1412 may be dedicated to wired communications.

The computing device 1400 may include battery/power circuitry 1414. The battery/power circuitry 1414 may include one or more energy storage devices (e.g., batteries or capacitors) and/or circuitry for coupling components of the computing device 1400 to an energy source separate from the computing device 1400 (e.g., AC line power).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include an audio output device 1408 (or corresponding interface circuitry, as discussed above). The audio output device 1408 may include any device that generates an audible indicator, such as speakers, headsets, or earbuds, for example.

The computing device 1400 may include an audio input device 1418 (or corresponding interface circuitry, as discussed above). The audio input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include another output device 1410 (or corresponding interface circuitry, as discussed above). Examples of the other output device 1410 may include an audio codec, a video codec, a printer, a wired or wireless transmitter for providing information to other devices, or an additional storage device.

The computing device 1400 may include another input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (register fileID) reader.

The computing device 1400 may have any desired form factor, such as a handheld or mobile computer system (e.g., a cell phone, a smart phone, a mobile internet device, a music player, a tablet computer, a laptop computer, a netbook computer, an ultrabook computer, a PDA, an ultramobile personal computer, etc.), a desktop computer system, a server or other networked computing component, a printer, a scanner, a monitor, a settop box, an entertainment control unit, a vehicle control unit, a digital camera, a digital video recorder, or a wearable computer system. In some embodiments, the computing device 1400 may be any other electronic device that processes data.

## Select Examples

The following paragraphs provide various examples of the embodiments disclosed herein.

Example 1 provides a method of deep learning, the method including reading a weight tensor from a first memory, where the weight tensor includes weights in one or more convolutional kernels, and the weights are arranged in a three-dimensional matrix and are to be used by an array of PEs to execute a convolution; partitioning the weight tensor into a plurality of virtual banks based on an arrangement of the PEs in the array; partitioning a virtual bank of the plurality of virtual banks into a plurality of virtual sub-banks; identifying data blocks from different ones of the plurality of virtual sub-banks; forming a linear data structure by interleaving the data blocks, the linear data structure including the data blocks arranged in a linear sequence; and writing the linear data structure into a second memory associated with a part of the array.

Example 2 provides the method of example 1, where the array of PEs includes PEs arranged in columns, and the part of the array is one of the columns.

Example 3 provides the method of example 2, where each respective virtual bank of the plurality of virtual banks corresponds to a different one of the columns.

Example 4 provides the method of any of the preceding examples, where the array of PEs constitutes at least part of a convolutional layer in a DNN and is to perform the convolution on the weights and an input tensor to generate an output tensor.

Example 5 provides the method of example 4, where the three-dimensional matrix has a first dimension determined based on a number of input channels in the input tensor, a second dimension determined based on a size of the one or more convolutional kernels, and a third dimension determined based on a number of output channels in the output tensor.

Example 6 provides the method of example 5, where partitioning the virtual bank into a plurality of virtual sub-banks includes partitioning the virtual bank in the third dimension, where a dimension of a virtual sub-bank equals an integral divisor of the number of output channels in the output tensor.

Example 7 provides the method of example 5 or 6, where a data block has a dimension that equals a predetermined number of input channels.

Example 8 provides the method of any of the preceding examples, where the data blocks include first data blocks from a first virtual sub-bank of the plurality of virtual sub-banks and second data blocks from a second virtual sub-bank of the plurality of virtual sub-banks, and the first data blocks alternate with the second data blocks in the linear data structure.

Example 9 provides the method of any of the preceding examples, further includes before identifying data blocks from different ones of the plurality of virtual sub-banks, removing weights having zero values from at least some of the plurality of virtual sub-banks.

Example 10 provides the method of any of the preceding examples, where the first memory is outside the array of PEs, and the second memory is inside the array of PEs.

Example 11 provides a DNN accelerator, the DNN accelerator including an array of PEs configured to execute a convolution on an input tensor with the weight tensor to produce an output tensor, where the weight tensor includes weights in one or more convolutional kernels, and the weights are arranged in a three-dimensional matrix; a first memory for storing the weight tensor; a second memory associated with a part of the array; and a DMA engine that is configured to read the weight tensor from the first memory, partitioning the weight tensor into a plurality of virtual banks based on an arrangement of the PEs in the array, partitioning a virtual bank of the plurality of virtual banks into a plurality of virtual sub-banks, identify data blocks from different ones of the plurality of virtual sub-banks, form a linear data structure by interleaving the data blocks, the linear data structure including the data blocks arranged in a linear sequence, and write the linear data structure into the second memory.

Example 12 provides the DNN accelerator of example 11, where the array of PEs includes PEs arranged in columns, and the part of the array is one of the columns.

Example 13 provides the DNN accelerator of example 12, where each respective virtual bank of the plurality of virtual banks corresponds to a different one of the columns.

Example 14 provides the DNN accelerator of any one of examples 11-13, where the array of PEs constitutes at least part of a convolutional layer in the DNN and is to perform the convolution on the weight tensor and an input tensor to generate an output tensor.

Example 15 provides the DNN accelerator of example 14, where the three-dimensional matrix has a first dimension determined based on a number of input channels in the input tensor, a second dimension determined based on a size of the one or more convolutional kernels, and a third dimension determined based on a number of output channels in the output tensor.

Example 16 provides the DNN accelerator of example 15, where the DMA engine is configured to partition the virtual bank into a plurality of virtual sub-banks by partitioning the virtual bank in the third dimension, where a dimension of a virtual sub-bank equals an integral divisor of the number of output channels in the output tensor.

Example 17 provides the DNN accelerator of example 15 or 16, where a data block has a dimension that equals a predetermined number of input channels.

Example 18 provides the DNN accelerator of any one of examples 11-17, where the data blocks include first data blocks from a first virtual sub-bank of the plurality of virtual sub-banks and second data blocks from a second virtual sub-bank of the plurality of virtual sub-banks, and the first data blocks alternate with the second data blocks in the linear data structure.

Example 19 provides the DNN accelerator of any one of examples 11-18, where the DMA engine is further configured to before identifying data blocks from different ones of the plurality of virtual sub-banks, remove weights having zero values from at least some of the plurality of virtual sub-banks.

Example 20 provides the DNN accelerator of any one of examples 11-19, where the first memory is outside the array of PEs, and the second memory is inside the array of PEs.

Example 21 provides one or more non-transitory computer-readable media storing instructions executable to perform operations for training a target neural network, the operations including reading a weight tensor from a first memory, where the weight tensor includes weights in one or more convolutional kernels, and the weights are arranged in a three-dimensional matrix and are to be used by an array of PEs to execute a convolution; partitioning the weight tensor into a plurality of virtual banks based on an arrangement of the PEs in the array; partitioning a virtual bank of the plurality of virtual banks into a plurality of virtual sub-banks; identifying data blocks from different ones of the plurality of virtual sub-banks; forming a linear data structure by interleaving the data blocks, the linear data structure including the data blocks arranged in a linear sequence; and writing the linear data structure into a second memory associated with a part of the array.

Example 22 provides the one or more non-transitory computer-readable media of example 21, where the array of PEs includes PEs arranged in columns, and the part of the array is one of the columns.

Example 23 provides the one or more non-transitory computer-readable media of example 21 or 22, where the array of PEs constitutes at least part of a convolutional layer in a DNN and is to perform the convolution on the weight tensor and an input tensor to generate an output tensor.

Example 24 provides the one or more non-transitory computer-readable media of any one of examples 21-23, where the data blocks include first data blocks from a first virtual sub-bank of the plurality of virtual sub-banks and second data blocks from a second virtual sub-bank of the plurality of virtual sub-banks, and the first data blocks alternate with the second data blocks in the linear data structure.

Example 25 provides the one or more non-transitory computer-readable media of any one of examples 21-24, where the operations further include before identifying data blocks from different ones of the plurality of virtual sub-banks, removing weights having zero values from at least some of the plurality of virtual sub-banks.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

**1.** A method of deep learning, the method comprising:

reading a weight tensor from a first memory, wherein the weight tensor comprises weights in one or more convolutional kernels, and the weights are arranged in a three-dimensional matrix and are to be used by an array of processing elements (PEs) to execute a convolution;
partitioning the weight tensor into a plurality of virtual banks based on an arrangement of the PEs in the array;
partitioning a virtual bank of the plurality of virtual banks into a plurality of virtual sub-banks;
identifying data blocks from different ones of the plurality of virtual sub-banks;
forming a linear data structure by interleaving the data blocks, the linear data structure comprising the data blocks arranged in a linear sequence; and
writing the linear data structure into a second memory associated with a part of the array.

**2.** The method of claim 1, wherein:

the array of PEs comprises PEs arranged in columns, and the part of the array is one of the columns, and
optionally, each respective virtual bank of the plurality of virtual banks corresponds to a different one of the columns.

**3.** The method of claim 1 or 2, wherein:

the array of PEs constitutes at least part of a convolutional layer in a deep neural network (DNN) and is to perform the convolution on the weights and an input tensor to generate an output tensor, and
optionally, the three-dimensional matrix has a first dimension determined based on a number of input channels in the input tensor, a second dimension determined based on a size of the one or more convolutional kernels, and a third dimension determined based on a number of output channels in the output tensor.

**4.** The method of claim 3, wherein:

partitioning the virtual bank into a plurality of virtual sub-banks comprises:

partitioning the virtual bank in the third dimension,
wherein a dimension of a virtual sub-bank equals an integral divisor of the number of output channels in the output tensor; or

a data block has a dimension that equals a predetermined number of input channels.

**5.** The method of any of the preceding claims, wherein:

the data blocks comprise first data blocks from a first virtual sub-bank of the plurality of virtual sub-banks and second data blocks from a second virtual sub-bank of the plurality of virtual sub-banks, and
the first data blocks alternate with the second data blocks in the linear data structure.

**6.** The method of any of the preceding claims, further comprises:

before identifying data blocks from different ones of the plurality of virtual sub-banks, removing weights having zero values from at least some of the plurality of virtual sub-banks.

**7.** The method of any of the preceding claims, wherein the first memory is outside the array of PEs, and the second memory is inside the array of PEs.

**8.** A deep neural network (DNN) accelerator, the DNN accelerator comprising:

an array of processing elements (PEs) configured to execute a convolution on an input tensor with a weight tensor to produce an output tensor, wherein the weight tensor comprises weights in one or more convolutional kernels, and the weights are arranged in a three-dimensional matrix;
a first memory for storing the weight tensor;
a second memory associated with a part of the array; and
a direct memory access (DMA) engine that is configured to:

read the weight tensor from the first memory,
partitioning the weight tensor into a plurality of virtual banks based on an arrangement of the PEs in the array,
partitioning a virtual bank of the plurality of virtual banks into a plurality of virtual sub-banks,
identify data blocks from different ones of the plurality of virtual sub-banks,
form a linear data structure by interleaving the data blocks, the linear data structure comprising the data blocks arranged in a linear sequence, and
write the linear data structure into the second memory.

**9.** The DNN accelerator of claim 8, wherein:

the array of PEs comprises PEs arranged in columns, and the part of the array is one of the columns, and
optionally, each respective virtual bank of the plurality of virtual banks corresponds to a different one of the columns.

**10.** The DNN accelerator of claim 8 or 9, wherein:

the array of PEs constitutes at least part of a convolutional layer in the DNN and is to perform the convolution on the weight tensor and an input tensor to generate an output tensor, and
optionally, the three-dimensional matrix has a first dimension determined based on a number of input channels in the input tensor, a second dimension determined based on a size of the one or more convolutional kernels, and a third dimension determined based on a number of output channels in the output tensor.

**11.** The DNN accelerator of claim 10, wherein:

the DMA engine is configured to partition the virtual bank into a plurality of virtual sub-banks by partitioning the virtual bank in the third dimension, wherein a dimension of a virtual sub-bank equals an integral divisor of the number of output channels in the output tensor; or
a data block has a dimension that equals a predetermined number of input channels.

**12.** The DNN accelerator of any one of claims 8-11, wherein:

the data blocks comprise first data blocks from a first virtual sub-bank of the plurality of virtual sub-banks and second data blocks from a second virtual sub-bank of the plurality of virtual sub-banks, and
the first data blocks alternate with the second data blocks in the linear data structure.

**13.** The DNN accelerator of any one of claims 8-12, wherein the DMA engine is further configured to:
before identifying data blocks from different ones of the plurality of virtual sub-banks, remove weights having zero values from at least some of the plurality of virtual sub-banks.

**14.** The DNN accelerator of any one of claims 8-13, wherein the first memory is outside the array of PEs, and the second memory is inside the array of PEs.

**15.** One or more non-transitory computer-readable media storing instructions executable to perform the method of any one of claims 1-7.

DNN
100
Object
115
Object
125
Object
135
Input Image
105
140
150
160
163
193
183
180
190
Convolutional Layer 110
Pooling Layer 120
Fully Connected Layer
130


FIG. 1

DNN Accelerator
200
Memory
210
DMA Engine
220
PE Array
230
Memory
240

FIG. 2

DMA Engine
220
Read Module
310
Partition Module
320
Transposing Module
330
Compression Module
340
Rearrangement Module
350
Write Module
350

FIG. 3

400
405
PE
410
Column
Buffer
420
Load
430
Drain
440
450
460
470

FIG. 4

PE
410
Input Register
File
540
Weight Register
File
550
Output Register
File
560
MAC Unit
570
Multiply
Unit
580
Accumulate
Unit
550

FIG. 5

Input Tensor
610
$C_{in}$
*
Weight Tensor
620
$C_{in}$
Fx
Fy
filter
625A
filter
625B
filter
625N
=
Output Tensor
630
$C_{out}$

FIG. 6

700
F
$C_{in}$
$C_{out}$
FIG. 7A
710
$K_{VB}$
$K_{VB}$
$K_{VB}$
$K_{VB}$
$K_{VB}$
$K_{VB}$
$K_{VB}$
$K_{VB}$
F
$C_{in}$
FIG. 7B

800
810A
810B
810C
810D
820A
820B
820C
820D
$K_{VSB}$
$K_{VSB}$
$K_{VSB}$
$K_{VSB}$
$K_{VB}$
$C_{in}$
F

FIG. 8

900

820A
820B
820A
820B
820A
820B
820A
820B
820C
820D
820C
820D
820C
820D
820C
820D

FIG. 9

1030
1017A
1017B
1017C
1017D
1040
1027A
1027B
1027C
1027D
1017A
1015A
1015B
1015C
1015D
1010
1025A
1025B
1025C
1025D
1020

FIG. 10

1100
Read a weight tensor from a first memory, wherein the weight tensor comprises weights in one or more convolutional filters, and the weights are arranged in a three-dimensional matrix and are to be used by an array of PEs to execute a convolution
1110
Partition the weight tensor into a plurality of virtual banks based on an arrangement of the PEs in the array
1120
Partition a virtual bank of the plurality of virtual banks into a plurality of virtual sub-banks
1130
Identify data blocks from different ones of the plurality of virtual sub-banks
1140
Form a linear virtual bank by interleaving the data blocks, the linear data structure comprising the data blocks arranged in a linear sequence
1150
Write the linear data structure into a second memory associated with a part of the array.
1160

FIG. 11

Deep Learning Environment
1200
Deep Learning Server
1210
DNN
System
1240
Database
1250
Distributer
1260
Network
1230
Client Device
1220
Client Device
1220
Client Device
1220


FIG. 12

DNN System
1300
Interface Module
1310
Training Module
1320
Validation Module
1330
Interference
Module
1340
Memory
1350

FIG. 13

COMPUTING DEVICE
1400
PROCESSING DEVICE
1402
COMMUNICATION CHIP
1412
MEMORY
1404
BATTERY/POWER
1414
DISPLAY DEVICE
1406
GPS DEVICE
1416
AUDIO OUTPUT DEVICE
1408
AUDIO INPUT DEVICE
1418
OTHER OUTPUT DEVICE
1410
OTHER INPUT DEVICE
1420
ANTENNA
1422

FIG. 14

Europäisches
Patentamt
European
Patent Office
Office européen
des brevets

# EUROPEAN SEARCH REPORT

Application Number
EP 23 18 6375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | R. SUN ET AL.: "A 974GOPS/W Multi-level Parallel Architecture for Binary Weight Network Acceleration", 2018 IEEE INTERNATIONAL SYMPOSIUM ON CIRCUITS AND SYSTEMS (ISCAS), IEEE, 27 May 2018 (2018-05-27), pages 1-4, XP033434693, DOI: 10.1109/ISCAS.2018.8351247 [retrieved on 2018-04-26] * the whole document * | 1-15 | INV. G06N3/063 G06N3/0464 G06F13/28 ADD. G06N3/09 |
| A | US 2018/189215 A1 (ST MICROELECTRONICS SRL [IT]; ST MICROELECTRONICS INT NV [NL]) 5 July 2018 (2018-07-05) * figures 4-6 * * paragraphs [0247], [0266] - [0269] * * paragraphs [0273], [0287] - [0302] * | 1-15 | |
| A | C. GAO ET AL.: "Spartus: A 9.4 TOp/s FPGA-based LSTM Accelerator Exploiting Spatio-Temporal Sparsity", ARXIV.ORG, CORNELL UNIVERSITY LIBRARY, 201 OLIN LIBRARY CORNELL UNIVERSITY ITHACA, NY 14853, 13 June 2022 (2022-06-13), XP091244911, DOI: 10.1109/TNNLS.2022.3180209 * sections III-C, IV-A, IV-E * | 1-15 | TECHNICAL FIELDS SEARCHED (IPC): G06N |

-/--

The present search report has been drawn up for all claims

2

| Place of search | Date of completion of the search | Examiner |
|---|---|---|
| The Hague | 15 February 2024 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

# EUROPEAN SEARCH REPORT

Application Number
EP 23 18 6375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Y. LIANG ET AL.: "OMNI: A Framework for Integrating Hardware and Software Optimizations for Sparse CNNs", IEEE TRANSACTIONS ON COMPUTER-AIDED DESIGN OF INTEGRATED CIRCUITS AND SYSTEMS, vol. 40, no. 8, 14 September 2020 (2020-09-14), pages 1648-1661, XP011866767, ISSN: 0278-0070, DOI: 10.1109/TCAD.2020.3023903 [retrieved on 2021-07-15] * sections III, V-A, V-C, V-E * ----- | 1-15 | |
| | | | TECHNICAL FIELDS SEARCHED (IPC) |

The present search report has been drawn up for all claims

2

| Place of search | Date of completion of the search | Examiner |
|---|---|---|
| The Hague | 15 February 2024 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 18 6375

This annex lists the patent family members relating to the patent documents cited in the above-mentioned European search report. The members are as contained in the European Patent Office EDP file on
The European Patent Office is in no way liable for these particulars which are merely given for the purpose of information.

15-02-2024

| Patent document cited in search report | Publication date | Patent family member(s) | Publication date |
|---|---|---|---|
| US 2018189215 A1 | 05-07-2018 | CN 108268942 A | 10-07-2018 |
| | | CN 108268943 A | 10-07-2018 |
| | | CN 207731321 U | 14-08-2018 |
| | | CN 207993065 U | 19-10-2018 |
| | | US 2018189215 A1 | 05-07-2018 |
| | | US 2018189229 A1 | 05-07-2018 |
| | | US 2018189424 A1 | 05-07-2018 |
| | | US 2018189641 A1 | 05-07-2018 |
| | | US 2018189642 A1 | 05-07-2018 |
| | | US 2019340314 A1 | 07-11-2019 |
| | | US 2019377840 A1 | 12-12-2019 |
| | | US 2021073450 A1 | 11-03-2021 |

EPO FORM P0459

For more details about this annex : see Official Journal of the European Patent Office, No. 12/82